# EUROPEAN PATENT APPLICATION

(11) **EP 4 585 634 A1**
(43) Date of publication of application: **16.07.2025**
(21) Application number: 23862897.8
(22) Date of filing: 17.08.2023
(51) Int. Cl.: C08G 65/332

(54) **FLUOROPOLYETHER GROUP-CONTAINING COMPOUND, PHOTOCROSSLINKABLE FLUOROPOLYETHER COMPOSITION, PHOTOCROSSLINKED PRODUCT, AND PHOTOCROSSLINKING METHOD OF COMPOSITION**

(30) Priority: 09.09.2022 JP 2022143431
(71) Applicant: SHIN-ETSU CHEMICAL CO., LTD., Tokyo 1000005 (JP)
(72) Inventor: SAKANO, Yasunori, Annaka-shi, Gunma 379-0224 (JP)
(74) Representative: Ter Meer Steinmeister & Partner
(86) International application number: PCT/JP2023/029711
(87) International publication number: WO 2024/053357

(57) **Abstract**

A photocrosslinkable fluoropolyether composition containing a novel fluoropolyether group-containing compound, the compound having, 1-20 in total per molecule, monovalent groups represented by general formula (1) at one or both ends, via linking groups, of a linear perfluoropolyether group with a number-average molecular weight of 1,000 to 40,000. This photocrosslinkable fluoropolyether composition has excellent storage stability and can form a transparent crosslinked product (cured product) upon light irradiation, even if not containing a photopolymerization initiator or polymerization inhibitor. 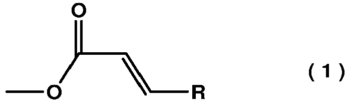 (In the formula, R is a phenyl group optionally having one or two, the same or different substituents.)

## Description

### TECHNICAL FIELD

The present invention relates to a fluoropolyether group-containing compound that can be crosslinked and cured by light irradiation and has excellent storage stability, a photocrosslinkable fluoropolyether composition containing the fluoropolyether group-containing compound, a photocrosslinked product of the photocrosslinkable fluoropolyether composition, an article having the photocrosslinked product, and a method for photocrosslinking the composition.

### BACKGROUND ART

In the prior art, polymers containing polymerizable monomers having perfluoroalkyl groups in the side chain, such as acrylic acid fluorine-containing alkyl esters and methacrylic acid fluorine-containing alkyl esters, are well known as fluorine compounds that are curable upon irradiation with light, such as ultraviolet rays. Many attempts have been made to use these fluorine-containing acrylic compounds in applications taking advantage of good curability upon UV irradiation, and the water repellency, oil repellency, chemical resistance, solvent resistance, stain resistance, high transparency, and low refractive index of fluorine. For example, JP-A H06-136062 (Patent Document 1) discloses the use of acrylic compounds containing fluorine in the side chain in antireflection film applications. JP-A H05-32749 (Patent Document 2) discloses the use of such acrylic compounds as optical fiber coating agents.

As the fluorine content of these fluorine-containing acrylic compounds is increased for the purpose of improving water repellency, oil repellency, chemical resistance, stain resistance, and solvent resistance and further lowering refractive index or other purposes, the fluorine-containing acrylic compounds become less soluble in non-fluorinated organic compounds and insoluble in common photopolymerization initiators. This raises the problem that no transparent cured products are obtained or the cured products become more crystalline to lose transparency.

Under such circumstances, the inventors of the present invention have proposed, for example, fluorine-containing acrylic compositions that are UV-curable and can form transparent cured products having a low refractive index as in JP-A 2006-233172 (Patent Document 3).

Although these compounds can form transparent cured products having a low refractive index, the compositions containing these compounds require separate synthesis of a photopolymerization initiator modified with a perfluoropolyether group. Since these compounds have a crosslinked structure formed by chain polymerization of acrylic groups, the crosslinked portions tend to be dense. These compounds are thus suitable for applications requiring hardness, but it is difficult to form, for example, gel-like crosslinked products requiring flexibility.

In addition, polymerization initiators commonly undergo cleavage of chemical bonds to generate low-molecular components when they exhibit their function. Thus, the low-molecular components generated after curing may cause problems such as reduced transparency of cured products in optical component applications and generation of volatile components in electronic component applications.

Acrylic compounds are susceptible not only to light but also to heat and thus require a polymerization inhibitor to achieve practical storage stability. Most polymerization inhibitors are non-fluorine compounds and have a problem of solubility in fluorine compounds like polymerization initiators. Many polymerization inhibitors, such as widely used 2,6-di-tert-butyl-p-cresol, have recently been restricted in use and discharge into the environment due to their toxicity to living organisms caused by their mechanism of action.

The following is a list of prior art documents including those related to other methods for producing the compound of the present invention.

### PRIOR ART DOCUMENTS

### PATENT DOCUMENTS

Patent Document 1: JP-A H06-136062
Patent Document 2: JP-A H05-32749
Patent Document 3: JP-A 2006-233172
Patent Document 4: JP-A 2013-237824
Patent Document 5: JP-A 2015-189843
Patent Document 6: JP-A 2017-190429
Patent Document 7: JP-A 2021-175782

### SUMMARY OF INVENTION

### TECHNICAL PROBLEM

An object of the present invention, which has been made under the above-mentioned circumstances, is to provide a fluoropolyether group-containing compound that basically does not require addition of photopolymerization initiators or polymerization inhibitors, has excellent storage stability, and can form a transparent crosslinked product (cured product) upon light irradiation, a photocrosslinkable fluoropolyether composition containing the fluoropolyether group-containing compound, a photocrosslinked product of the photocrosslinkable fluoropolyether composition, an article having the photocrosslinked product, and a method for photocrosslinking the composition.

### SOLUTION TO PROBLEM

The inventors of the present invention have carried out intensive studies to achieve the above-mentioned object and found out that a photocrosslinkable fluoropolyether composition comprising a novel fluoropolyether group-containing compound having, in its molecule, a total of 1 to 20 monovalent groups having specific structures represented by the general formula (1) described later at one or both terminals of a linear perfluoropolyether group having a number average molecular weight of 1,000 to 40,000 with a linking group therebetween has high storage stability and can form a transparent crosslinked product (cured product) upon light irradiation even when the photocrosslinkable fluoropolyether composition contains no photopolymerization initiator or polymerization inhibitor, completing the present invention.

Therefore, the present invention provides a fluoropolyether group-containing compound, a photocrosslinkable fluoropolyether composition comprising the fluoropolyether group-containing compound, a photocrosslinked product of the photocrosslinkable fluoropolyether composition, an article comprising the photocrosslinked product, and a method for photocrosslinking the composition, as described above.
[1] A fluoropolyether group-containing compound comprising, in its molecule, a total of 1 to 20 monovalent groups represented by the general formula (1) below, at one or both terminals of a linear perfluoropolyether group having a number average molecular weight of 1,000 to 40,000 with a linking group therebetween 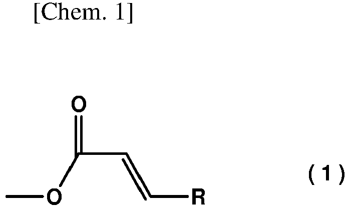 wherein R is a phenyl group and may have one or two identical or different substituents.
[2] The fluoropolyether group-containing compound according to claim 1 represented by the general formula (2) below:

   V-Rf-Y[Q(R¹-X)_{b}]_{c} (2)

   wherein V is a hydrogen atom, a fluorine atom, a C₁-C₆ alkyl group that may be substituted with fluorine, or a monovalent group represented by -Y[Q(R¹-X)_{b}]_{c}; Rf is a divalent linear perfluoropolyether group having a number average molecular weight of 1,000 to 40,000 and composed of C₁-C₆ perfluoroalkylene groups and oxygen atoms; Y is independently a single bond or a C₁-C₂₀ (c+1)-valent organic group that may contain an oxygen atom, a nitrogen atom, a fluorine atom, or a silicon atom; Q is independently a single bond or a (b+1)-valent linking group composed of one or two or more elements selected from C, O, H, N, Si, S, F, Cl, and Br, and may have a cyclic structure; R¹ is independently a single bond or a C₁-C₂₀ divalent organic group that may contain an oxygen atom, a nitrogen atom, or a sulfur atom; X is independently a monovalent group represented by the general formula (1) or a hydroxyl group, and 1 to 20 Xs in the molecule are monovalent groups represented by the general formula (1); b is independently an integer of 1 to 9; and c is independently an integer of 1 to 3.
[3] The fluoropolyether group-containing compound according to [1] or [2], wherein the linear perfluoropolyether group is a divalent perfluoropolyether group represented by the general formula below: 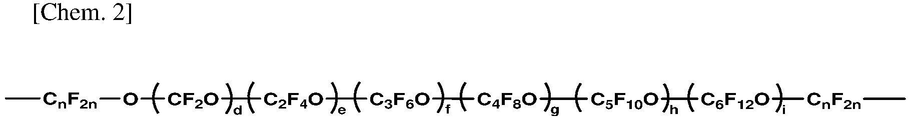 wherein n is independently for each unit an integer of 1 to 6; d, e, f, g, h, and i are each an integer of 0 to 200; d + e + f + g + h + i is an integer of 4 to 200; each unit may be linear or branched; individual repeating units in parentheses with subscripts d, e, f, g, h, and i may be randomly bonded; and the perfluoropolyether group has a number average molecular weight of 1,000 to 40,000.
[4] The fluoropolyether group-containing compound according to any one of [1] to [3], wherein the linear perfluoropolyether group is selected from divalent perfluoropolyether groups represented by the structural formulas below: 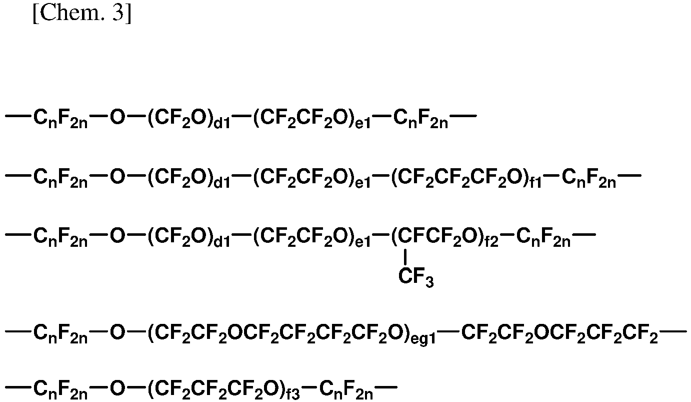 wherein n is independently for each unit an integer of 1 to 6; d1, e1, f1, and f2 are each an integer of 1 or more; each sum of d1, e1, f1, and f2 is an integer of 4 to 200; eg1 is an integer of 2 to 99; and f3 is an integer of 4 to 200. 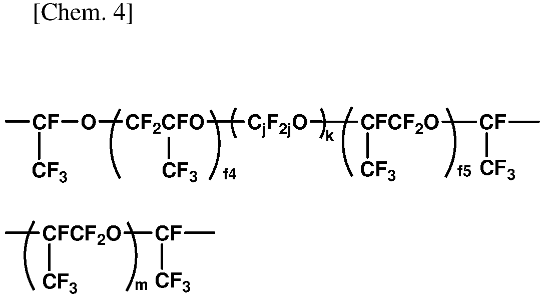 wherein j is an integer of 1 to 6; CⱼF₂ⱼO may be linear or branched but is linear when j is 3; k is an integer of 0 to 6; f4 and f5 are each an integer of 1 to 100; f4 + f5 is an integer of 2 to 200; k + f4 + f5 is an integer of 4 to 200; and m is an integer of 5 to 200.
[5] The fluoropolyether group-containing compound according to any one of [1] to [4], wherein the linking group that connects the monovalent group represented by the general formula (1) and the fluoropolyether group is a divalent to hexavalent group containing a cyclic structure.
[6] The fluoropolyether group-containing compound according to any one of [1] to [5], wherein the linking group that connects the monovalent group represented by the general formula (1) and the fluoropolyether group contains any one of the structures below: 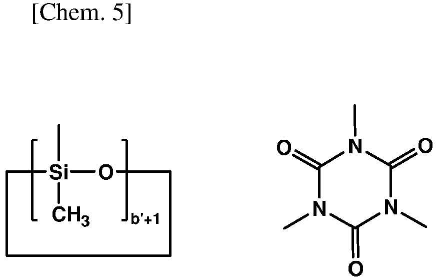 wherein b' is an integer of 2 to 9.
[7] The fluoropolyether group-containing compound according to any one of [1] to [6], wherein the monovalent group represented by the general formula (1) is a cinnamic acid residue represented by the structural formula below: 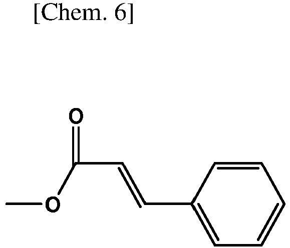
[8] The fluoropolyether group-containing compound according to any one of [2] to [7], wherein Y in the general formula (2) is a group represented by any one of formulas below:

   -CH₂-

   -C(=O)-

   -CH₂CH₂-

   -CH₂CH₂CH₂-

   -CH₂CH₂CH₂CH₂-

   -CH₂CH₂CH₂CH₂CH₂-

   -CH₂CH₂CH₂CH₂CH₂CH₂-

   -CH₂CH₂CH₂CH₂CH₂CH₂CH₂-

   -CH₂CH₂CH₂CH₂CH₂CH₂CH₂CH₂-

   -CH₂O-

   -CH₂OCH₂CH₂-

   -CH₂OCH₂CH₂CH₂-

   -CH₂OCH₂CH(CH₃)CH₂-

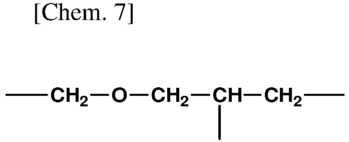

   -C(=O)-NH-

   -C(=O)-NH-CH₂CH₂-

   -C(=O)-NH-CH₂CH₂CH₂-

   -C(=O)-N(CH₃)-Ph-Si(CH₃)₂CH₂CH₂-

   -C(=O)-NH-Ph-CH₂CH₂CH₂Si(CH₃)₂CH₂CH₂-

   -C(=O)-N(CH₃)-Ph-CH₂CH₂CH₂Si(CH₃)₂CH₂CH₂-

   wherein Ph is a phenylene group.
[9] The fluoropolyether group-containing compound according to any one of [2] to [8], wherein R¹ in the general formula (2) is a group represented by any one of formulas below:

   -CₓH₂ₓ-

   -CₓH₂ₓ(OC_{y}H_{2y})_{z}-

   -CₓH₂ₓ(OC_{y}H_{2y})_{z}OCH₂CH(CH₃)-

   -CₓH₂ₓSC_{y}H_{2y}-

   -CₓH₂ₓCOO-C_{y}H_{2y}-

   -CₓH₂ₓCONH-C_{y}H_{2y}-

   -CₓH₂ₓO(CO)C_{y}H_{2y}-

   -CₓH₂ₓONH(CO)C_{y}H_{2y}-

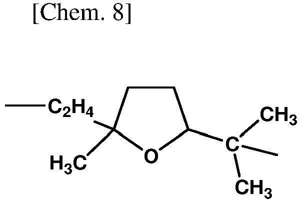

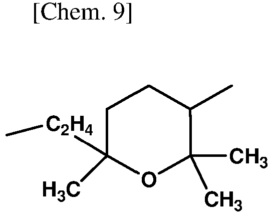

   -Ph-

   wherein x and y are each independently an integer of 1 to 20; z is an integer of 1 to 6; x + y and x + z × y are 20 or less; and Ph is a phenylene group.
[10] The fluoropolyether group-containing compound according to any one of [1] to [9] comprising a structure represented by any one of the formulas below: 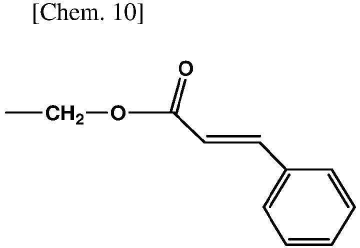 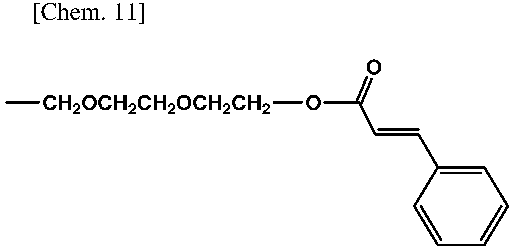 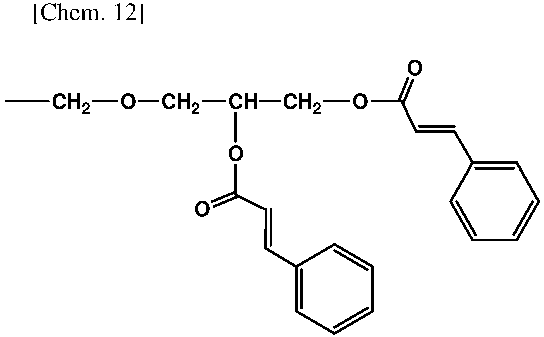 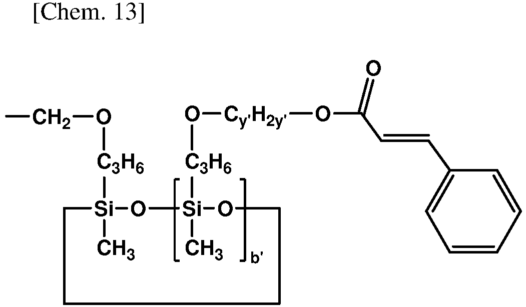 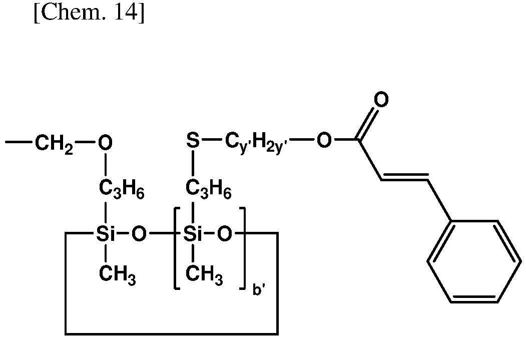 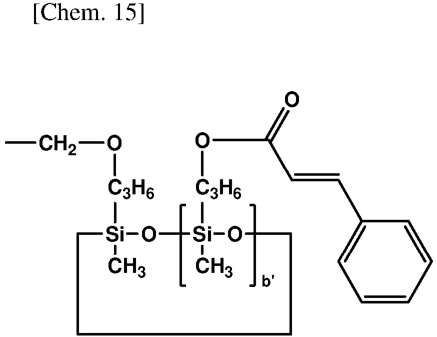 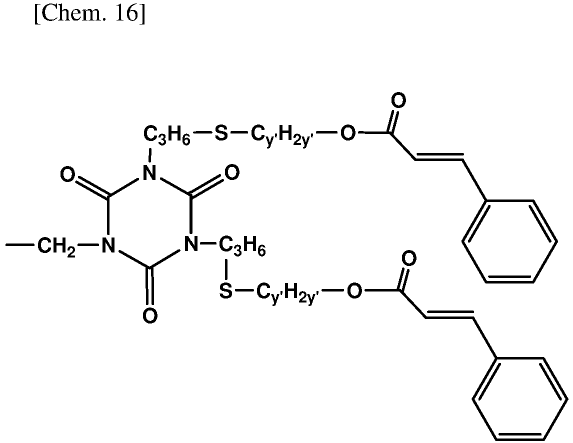 wherein b' is an integer of 2 to 9; and y' is independently for each unit an integer of 2 to 10.
[11] A photocrosslinkable fluoropolyether composition comprising the fluoropolyether group-containing compound according to any one of [1] to [10].
[12] The photocrosslinkable fluoropolyether composition according to [11] diluted with a fluorinated solvent containing 0.001 to 99 % by weight of the fluoropolyether group-containing compound.
[13] The photocrosslinkable fluoropolyether composition according to [11] diluted with a non-fluorinated solvent containing 0.001 to 99 % by weight of the fluoropolyether group-containing compound.
[14] The photocrosslinkable fluoropolyether composition according to any one of [11] to [13], wherein a content of a component having a boiling point lower than 200°C under atmospheric pressure is 1 % by weight or less.
[15] The photocrosslinkable fluoropolyether composition according to any one of [11] to [14], wherein a concentration of the monovalent group represented by the general formula (1) is 0.0001 to 0.002 mol/g.
[16] A photocrosslinked product of the photocrosslinkable fluoropolyether composition according to any one of [11] to [15].
[17] An article comprising the photocrosslinked product according to [16].
[18] The article according to [17], wherein the photocrosslinked product is in a form of a film.
[19] A method for photocrosslinking a photocrosslinkable fluoropolyether composition, comprising a step of irradiating the photocrosslinkable fluoropolyether composition according to any one of [11] to [15] with light containing ultraviolet rays having a wavelength of 250 to 350 nm.

### ADVANTAGEOUS EFFECTS OF INVENTION

The photocrosslinkable fluoropolyether composition comprising the fluoropolyether group-containing compound of the present invention is thermally stable and has excellent long-term storage stability because it does not undergo crosslinking upon heating, contains no non-fluorinated compound because it does not require addition of photopolymerization initiators or polymerization inhibitors, and can form a transparent photocrosslinked structure without generating low-molecular-weight volatile components. Therefore, the photocrosslinkable fluoropolyether composition comprising the fluoropolyether group-containing compound of the present invention is useful as a coating agent for various optical components, a nanoimprint material, a potting agent for electronic components and various sensors, and a photocurable 3D printer output material.

### DESCRIPTION OF EMBODIMENTS

A fluoropolyether group-containing compound of the present invention has, in its molecule, a total of 1 to 20, preferably 1 to 12, more preferably 1 to 8 monovalent groups represented by the general formula (1) below, at one or both terminals of a linear perfluoropolyether group having a number average molecular weight of 1,000 to 40,000 with a linking group therebetween, 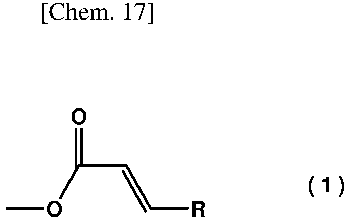 wherein R is a phenyl group and may have one or two identical or different substituents. When the fluoropolyether group-containing compound of the present invention has two or more monovalent groups represented by the formula (1), the monovalent groups represented by the formula (1) may be the same or different.

In the formula, R is a phenyl group, and the phenyl group may have one or two identical or different substituents. Examples of the substituent on the phenyl group include alkyl groups with 1 to 20 carbon atoms, preferably 1 to 10 carbon atoms, more preferably 1 to 6 carbon atoms, such as a methyl group, an ethyl group, a propyl group, an isopropyl group, a butyl group, an isobutyl group, a sec-butyl group, a tert-butyl group, a pentyl group, a hexyl group, a heptyl group, an octyl group, a 2-ethylhexyl group, a nonyl group, or a decyl group; halogen-substituted alkyl groups with 1 to 20 carbon atoms, preferably 1 to 10 carbon atoms, more preferably 1 to 6 carbon atoms, such as a trifluoromethyl group, in which some or all of the hydrogen atoms of the above alkyl group are substituted with halogen atoms such as fluorine; alkoxy groups with 1 to 20 carbon atoms, preferably 1 to 16 carbon atoms, more preferably 1 to 4 carbon atoms, such as a methoxy group, an ethoxy group, a propoxy group, an isopropoxy group, a butoxy group, an isobutoxy group, a sec-butoxy group, a tert-butoxy group, a hexadecyloxy group, or an octadecyloxy group; thioalkoxy groups with 1 to 20 carbon atoms, preferably 1 to 16 carbon atoms, more preferably 1 to 4 carbon atoms, in which the oxygen atom of the above alkoxy groups is substituted with a sulfur atom; and a phenyl group, a hydroxyl group, an amino group, a nitro group, a nitrile group, and halogen atoms, such as fluorine, chlorine, bromine, and iodine. R is particularly preferably an unsubstituted phenyl group.

Specific examples of the monovalent group represented by the formula (1) include those shown below.

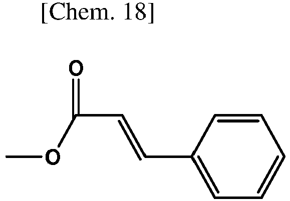

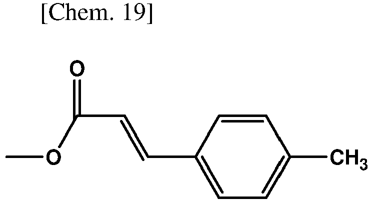

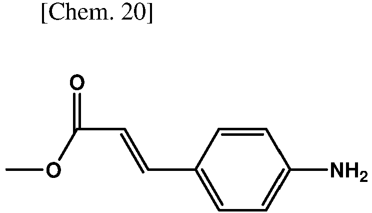

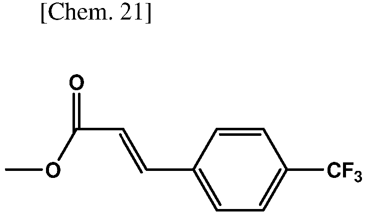

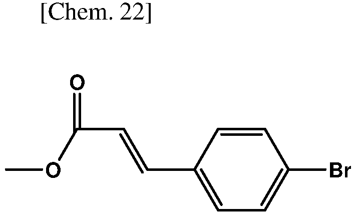

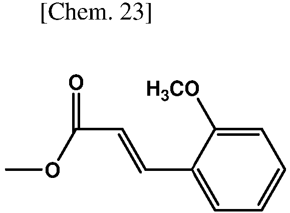

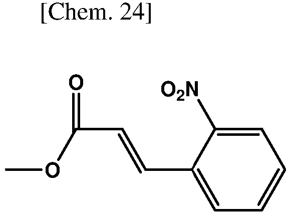

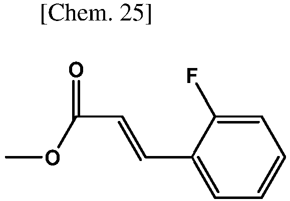

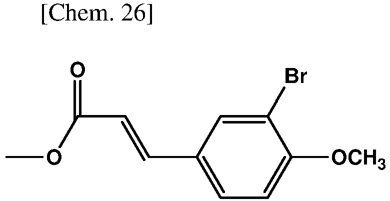

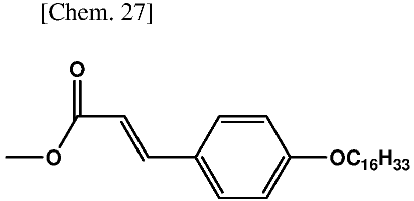

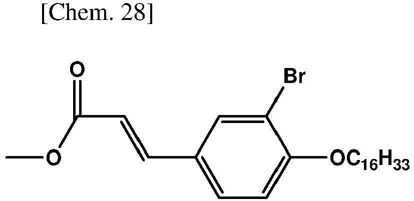

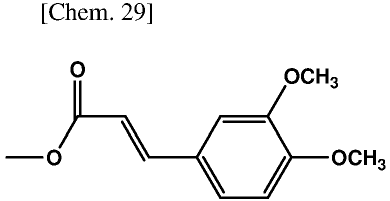

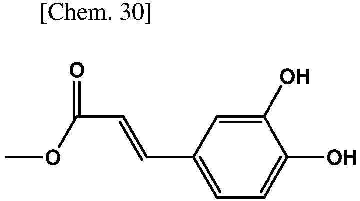

The monovalent group represented by the formula (1) is preferably a cinnamic acid residue represented by the structural formula below.

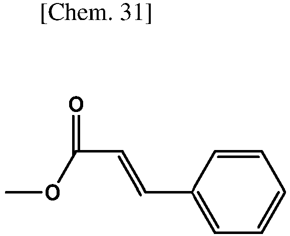

The fluoropolyether group-containing compound having the monovalent group represented by the formula (1) of the present invention is particularly preferably a fluoropolyether group-containing compound represented by the general formula (2) below.

V-Rf-Y[Q(R¹-X)_{b}]_{c} (2)

wherein V is a hydrogen atom, a fluorine atom, a C₁-C₆ alkyl group that may be substituted with fluorine, or a monovalent group represented by -Y[Q(R¹-X)_{b}]_{c}; Rf is a divalent linear perfluoropolyether group having a number average molecular weight of 1,000 to 40,000 and composed of C₁-C₆ perfluoroalkylene groups and oxygen atoms; Y is independently a single bond or a C₁-C₂₀ (c+1)-valent organic group that may contain an oxygen atom, a nitrogen atom, a fluorine atom, or a silicon atom; Q is independently a single bond or a (b+1)-valent linking group composed of one or two or more elements selected from C, O, H, N, Si, S, F, Cl, and Br, and may have a cyclic structure; R¹ is independently a single bond or a C₁-C₂₀ divalent organic group that may contain an oxygen atom, a nitrogen atom, or a sulfur atom; X is independently a monovalent group represented by the general formula (1) or a hydroxyl group, and 1 to 20 Xs, preferably 1 to 12 Xs, more preferably 1 to 8 Xs in the molecule are monovalent groups represented by the general formula (1); b is independently an integer of 1 to 9; and c is independently an integer of 1 to 3.

In the formula (2), V is a hydrogen atom, a fluorine atom, a C₁-C₆ alkyl group where some or all hydrogen atoms may be substituted with a fluorine atom, or a monovalent group represented by -Y[Q(R¹-X)_{b}]_{c}. Examples of the C₁-C₆ alkyl group where some or all hydrogen atoms may be substituted with a fluorine atom include methyl, ethyl, propyl, isopropyl, butyl, isobutyl, sec-butyl, tert-butyl, pentyl, hexyl, difluoromethyl (CF₂H-), trifluoromethyl (CF₃-), 2,2,2-trifluoroethyl (CF₃CH₂-), 1,1,2,2,2-pentafluoroethyl (CF₃CF₂-), 3,3,3-trifluoropropyl (CF₃CH₂CH₂-), 1,1,2,2,3,3,3-heptafluoropropyl (CF₃CF₂CF₂-), heptafluoroisopropyl ((CF₃)₂CF-), and 1,1,2,2,3,3,4,4,4-nonafluorobutyl (CF₃CF₂CF₂CF₂-) groups. Of these, V is preferably a fluorine atom or -Y[Q(R¹-X)_{b}]_{c}.

In the formula (2), Rf is a divalent linear perfluoropolyether group having a number average molecular weight of 1,000 to 40,000 and composed of C₁-C₆ perfluoroalkylene groups and oxygen atoms, and Rf preferably has a C₁-C₆ perfluorooxyalkylene structure, particularly preferably a C₁-C₄ perfluorooxyalkylene structure described below, as a main repeating unit.

-CF₂O-

-CF₂CF₂O-

-CF(CF₃)CF₂O-

-CF₂CF₂CF₂O-

-CF₂CF₂CF₂CF₂O-

These structures may form a homopolymer composed of one structure, or a random or block copolymer composed of a plurality of structures, or a copolymer having a specific sequence rule, such as an alternating copolymer.

Examples of Rf having such a structure include the following structure.

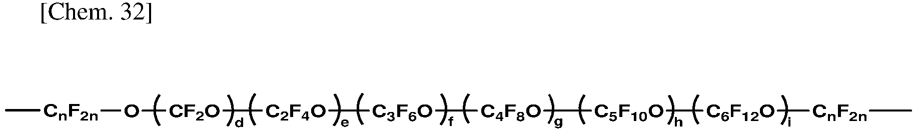

In the above formula, n is independently for each unit an integer of 1 to 6, preferably an integer of 1 to 4. The subscripts d, e, f, g, h, and i are each an integer of 0 to 200. Preferably, d is an integer of 0 to 100, especially an integer of 1 to 50, e is an integer of 0 to 100, especially an integer of 1 to 50, f is an integer of 0 to 100, especially an integer of 1 to 50, g is an integer of 0 to 100, h is an integer of 0 to 100, i is an integer of 0 to 100, and d + e + f + g + h + i is from 4 to 200, preferably from 10 to 150, more preferably from 30 to 150.

In the above formula, each unit may be linear or branched. The repeating units in the parentheses with subscripts d, e, f, g, h, and i may be randomly bonded.

The number average molecular weight of the structure portion corresponding to Rf is in the range of 1,000 to 40,000, preferably 2,000 to 25,000, and its molecular weight distribution (or degree-of-polymerization distribution) is not limited. If the number average molecular weight is less than 1,000, it is difficult to obtain the desired properties of the fluorine compound because of low fluorine atom content. If the average molecular weight exceeds 40,000, an increase in viscosity leads to a decrease in handleability, and a decrease in the concentration of terminal functional groups leads to reduced crosslinkability. In the present invention, the molecular weight (or the degree of polymerization or the number of repeating units) may be determined as a polystyrene-equivalent number average molecular weight (or a number average degree of polymerization) by gel permeation chromatography (GPC) using a fluorinated solvent as a developing solvent, or as a number average molecular weight (or a number average degree of polymerization) calculated from the characteristic peak intensity ratio between the terminal structure and the main chain structure as analyzed by ¹H-NMR and ¹⁹F-NMR spectroscopy.

Further preferred examples of Rf having such a structure include the following structures. 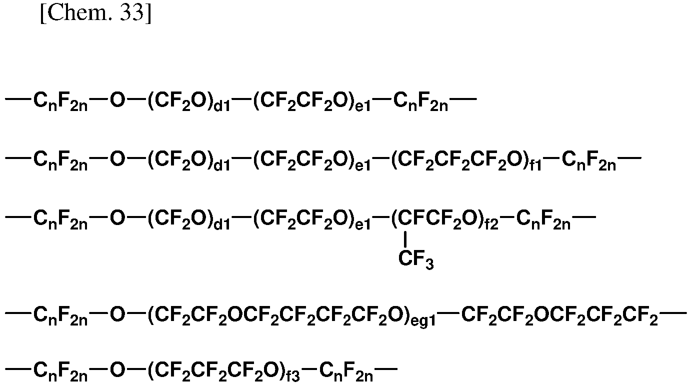 wherein n is independently for each unit an integer of 1 to 6; d1, e1, f1, and f2 are each an integer of 1 or more; each sum of d1, e1, f1, and f2 is an integer of 4 to 200, preferably an integer of 10 to 150; eg1 is an integer of 2 to 99; and f3 is an integer of 4 to 200, preferably an integer of 10 to 150. 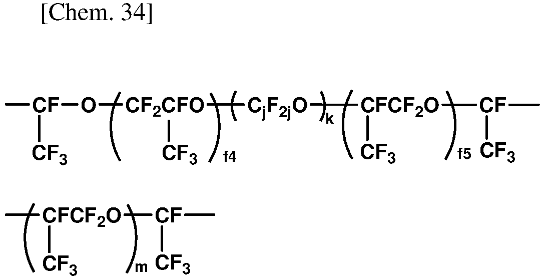 wherein j is an integer of 1 to 6, preferably an integer of 2 to 4; CⱼF₂ⱼO may be linear or branched but is linear when j is 3; k is an integer of 0 to 6, preferably an integer of 1 to 4; f4 is an integer of 1 to 100, preferably an integer of 5 to 80; f5 is an integer of 1 to 100, preferably an integer of 5 to 80; f4 + f5 is an integer of 2 to 200, preferably an integer of 10 to 150; k + f4 + f5 is an integer of 4 to 200, preferably an integer of 10 to 150; and m is an integer of 5 to 200, preferably an integer of 10 to 150.

In particular, when V is a hydrogen atom, a fluorine atom, a C₁-C₆ alkyl group that may be substituted with fluorine, Rf preferably has any one of the following structures. 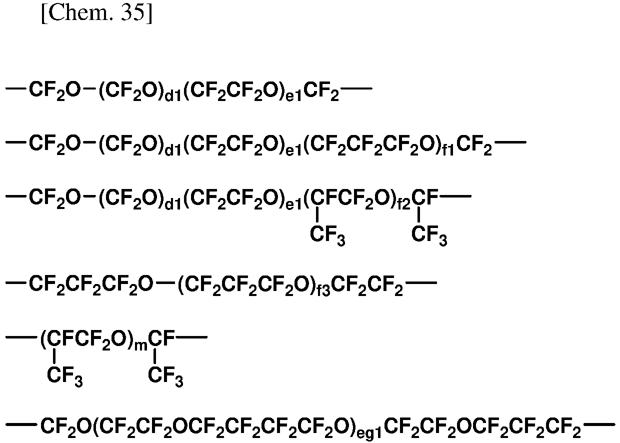 wherein d1, e1, f1, f2, the sum of d1 and e1 and f1 or f2, f3, m, and eg1 are as defined above.

When V is a monovalent group represented by -Y[Q(R¹-X)_{b}]_{c}, Rf preferably has any one of the following structures. 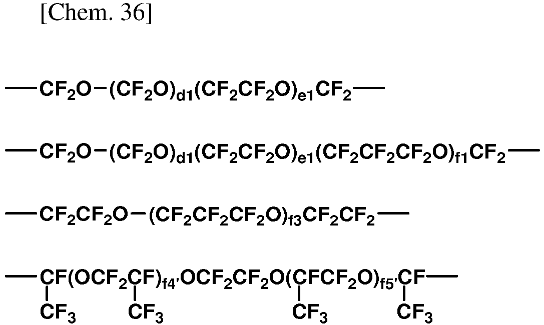 wherein d1, e1, f1, the sum of d1, e1, and f1, and f3 are as defined above; f4' is an integer of 1 to 100, preferably an integer of 5 to 80; f5' is an integer of 1 to 100, preferably an integer of 5 to 80; the sum of f4' and f5' is an integer of 4 to 199, preferably an integer of 10 to 149.

In the formula (2), Y is independently a single bond or a C₁-C₂₀ (c+1)-valent (i.e., divalent to tetravalent, preferably divalent or trivalent) organic group (especially a hydrocarbon group) that may contain an oxygen atom, a nitrogen atom, a fluorine atom, or a silicon atom. Examples of Y other than a single bond include the following groups. In the examples below, Ph is a phenylene group. Preferably, the left bond hand is bonded to Rf, and the other bond hand is bonded to Q (or R¹ or X).

-CH₂-

-C(=O)-

-CH₂CH₂-

-CH₂CH₂CH₂-

-CH₂CH₂CH₂CH₂-

-CH₂CH₂CH₂CH₂CH₂-

-CH₂CH₂CH₂CH₂CH₂CH₂-

-CH₂CH₂CH₂CH₂CH₂CH₂CH₂-

-CH₂CH₂CH₂CH₂CH₂CH₂CH₂CH₂-

-CH₂O-

-CH₂OCH₂CH₂-

-CH₂OCH₂CH₂CH₂-

-CH₂OCH₂CH(CH₃)CH₂-

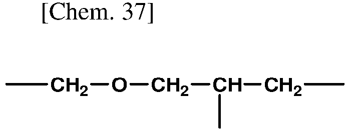

-C(=O)-NH-

-C(=O)-NH-CH₂CH₂-

-C(=O)-NH-CH₂CH₂CH₂-

-C(=O)-N(CH₃)-Ph-Si(CH₃)₂CH₂CH₂-

-C(=O)-NH-Ph-CH₂CH₂CH₂Si(CH₃)₂CH₂CH₂-

-C(=O)-N(CH₃)-Ph-CH₂CH₂CH₂Si(CH₃)₂CH₂CH₂-

Among these,

-CH₂-

-CH₂OCH₂CH₂-

-CH₂OCH₂CH₂CH₂-

-CH₂OCH₂CH(CH₃)CH₂-

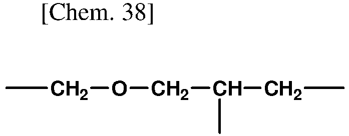

-C(=O)-NH-CH₂CH₂CH₂-

-C(=O)-N(CH₃)-Ph-Si(CH₃)₂CH₂CH₂-

-C(=O)-NH-Ph-CH₂CH₂CH₂Si(CH₃)₂CH₂CH₂-

are particularly preferred.

In the formula (2), Q is independently a single bond or a (b+1)-valent (i.e., divalent to decavalent, preferably trivalent to heptavalent) linking group composed of one or two or more elements selected from C, O, H, N, Si, S, F, Cl, and Br and may have a cyclic structure. Examples of Q other than a single bond include a carbon atom, a nitrogen atom, a silicon atom, and the following structures. In the examples below, the bond hand of each of (b'+1) individual units and the like is bonded to any one of Y and b R¹s enclosed in brackets [ ]. 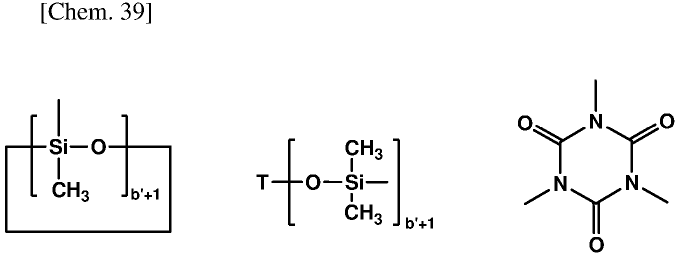 wherein b' is an integer of 2 to 9, preferably an integer of 2 to 6; and T is a (b'+1)-valent linking group.

Here, T is a (b'+1)-valent linking group (i.e., trivalent to decavalent, preferably trivalent to heptavalent linking group), and examples of T include the following groups.

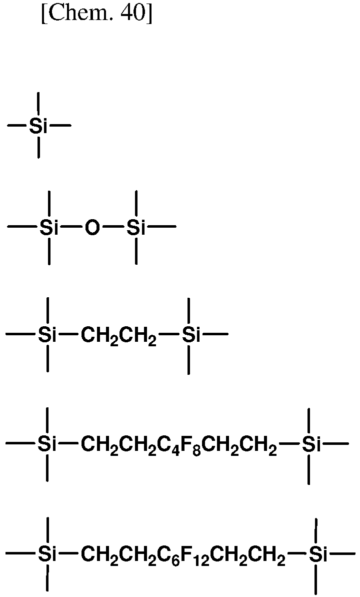

Q particularly preferably has any one of the following structures. 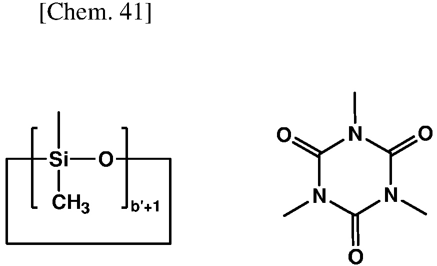 wherein b' is as defined above.

In the formula (2), R¹ is independently a single bond or a C₁-C₂₀ divalent organic group (especially a hydrocarbon group) that may contain an oxygen atom, a nitrogen atom, or a sulfur atom, may contain an ether bond, an ester bond, an amide bond, a urethane bond, or a sulfide bond, and may contain a cyclic structure. Examples of preferred structures other than a single bond include the following. In the examples below, the left bond hand is preferably bonded to Q (or Y), and the right bond hand is preferably bonded to X.

-CₓH₂ₓ-

-CₓH₂ₓ(OC_{y}H_{2y})_{z}-

-CₓH₂ₓ(OC_{y}H_{2y})_{z}OCH₂CH(CH₃)-

-CₓH₂ₓSC_{y}H_{2y}-

-CₓH₂ₓCOO-C_{y}H_{2y}-

-CₓH₂ₓCONH-C_{y}H_{2y}-

-CₓH₂ₓO(CO)C_{y}H_{2y}-

-CₓH₂ₓONH(CO)C_{y}H₂y-

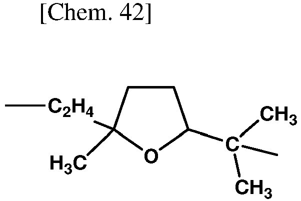

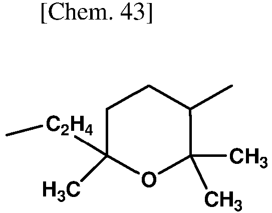

-Ph-

wherein x and y are each independently an integer of 1 to 20; x is preferably an integer of 1 to 10; y is preferably an integer of 2 to 10; z is an integer of 1 to 6, preferably an integer of 1 to 3; x + y and x + z × y are 20 or less; and Ph is a phenylene group.

Examples of particularly suitable structures include the following.

-C₃H₆-

-C₃H₆OC₂H₄-

-CH₂OCH₂CH₂OCH₂CH₂-

-C₃H₆OC₂H₄-

-C₃H₆SC₂H₄-

-C₃H₆SC₆H₁₂-

In the formula (2), Y, Q, and R¹ are not all single bonds, and a linking group having one or two or more selected from Y, Q, and R¹ is present between Rf and X.

In the formula (2), X is independently a monovalent group represented by the formula (1) or a hydroxyl group, and 1 to 20 Xs, preferably 1 to 12 Xs, more preferably 1 to 8 Xs in the molecule are monovalent groups represented by the formula (1). X is preferably only a monovalent organic group represented by the formula (1).

In the formula (2), b is independently an integer of 1 to 9, preferably an integer of 1 to 6, and c is independently an integer of 1 to 3, preferably 1 or 2.

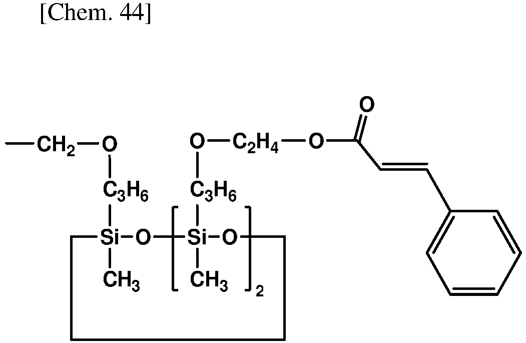

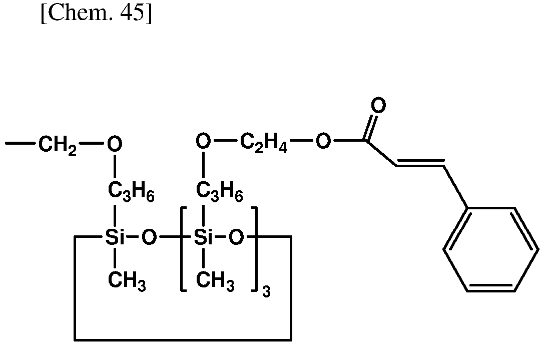

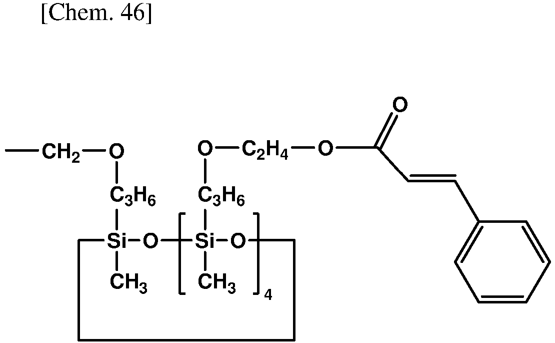

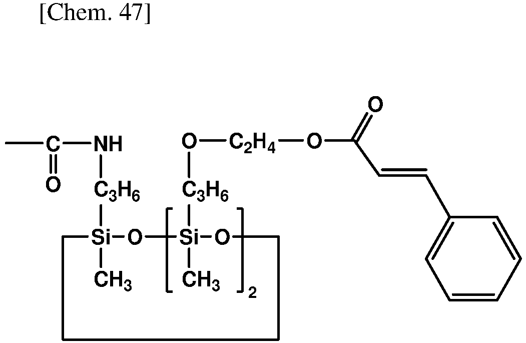

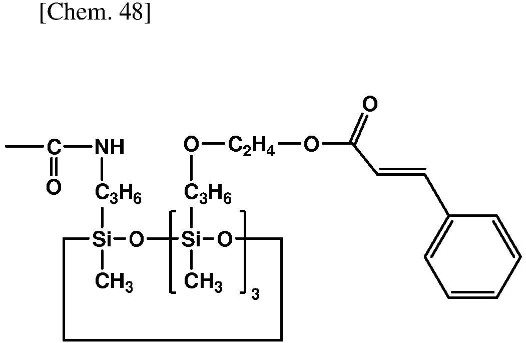

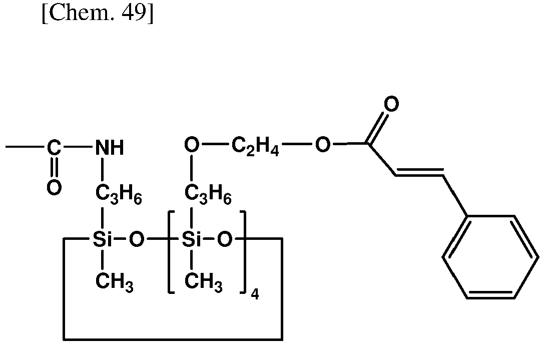

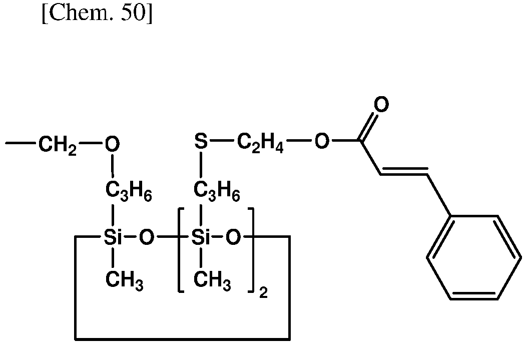

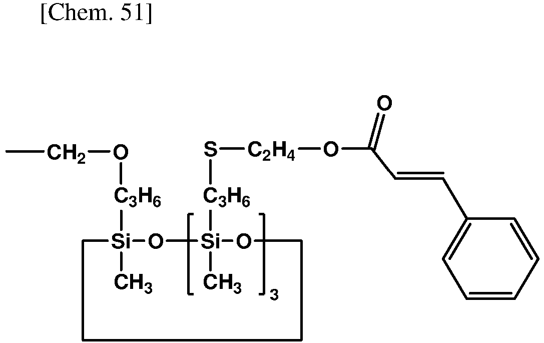

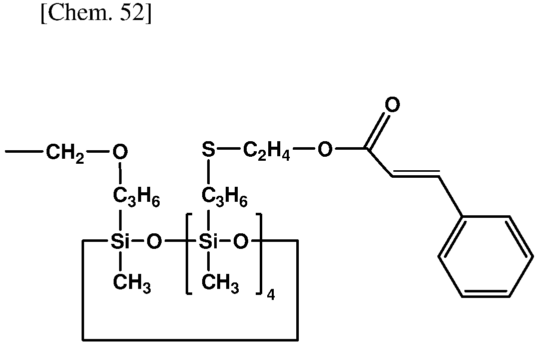

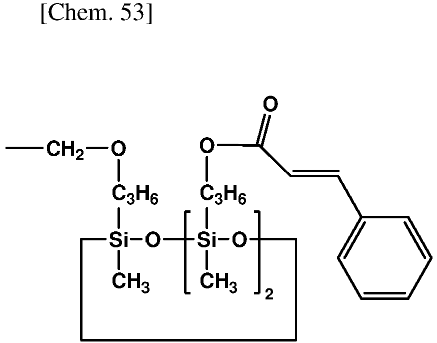

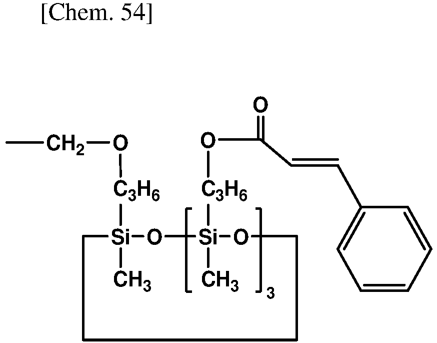

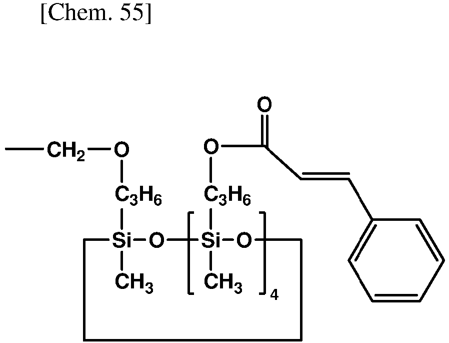

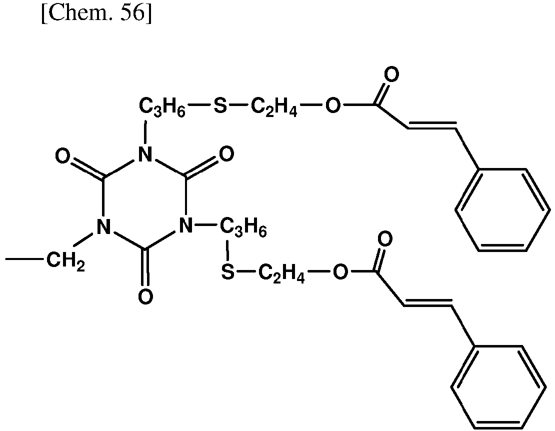

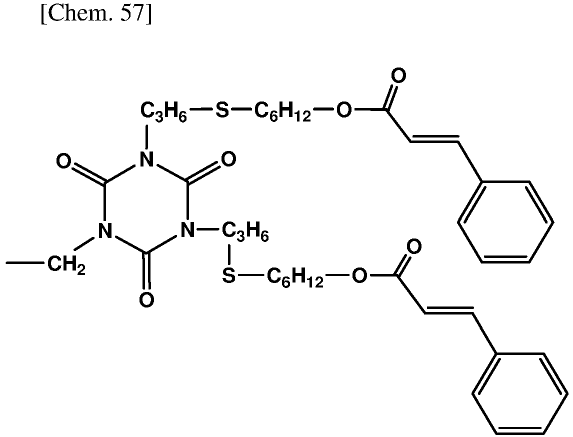

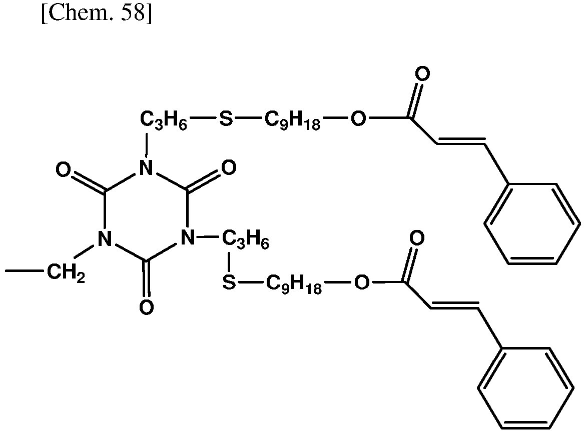

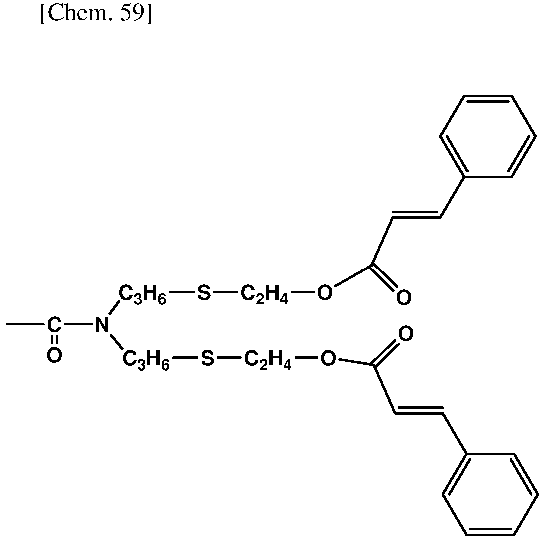

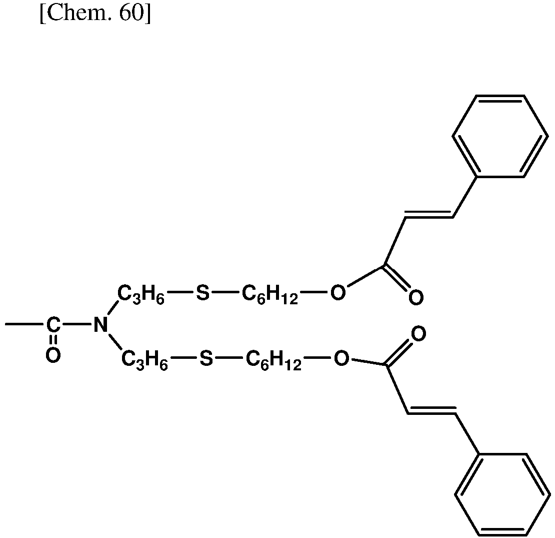

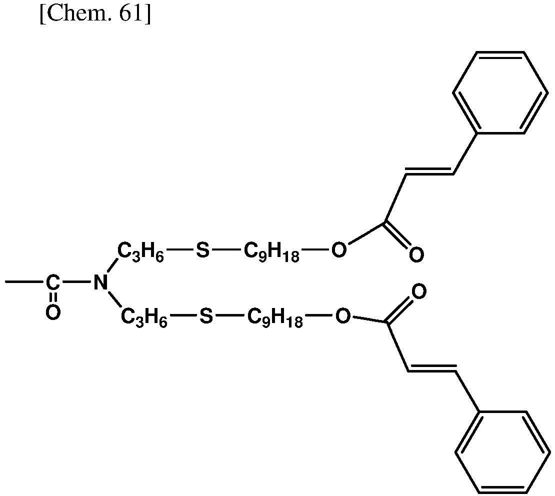

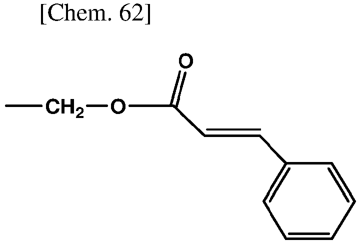

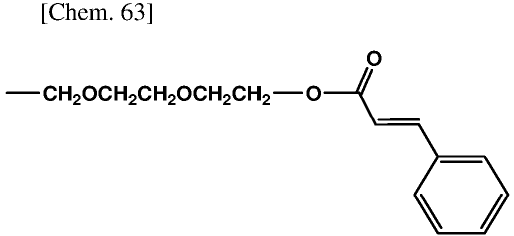

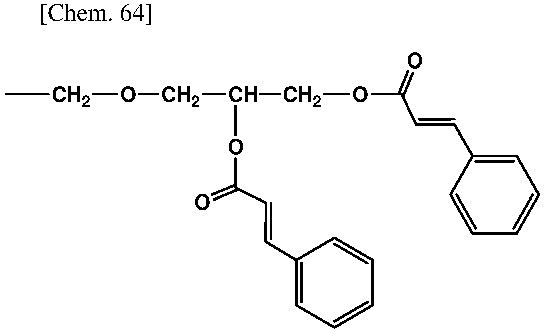

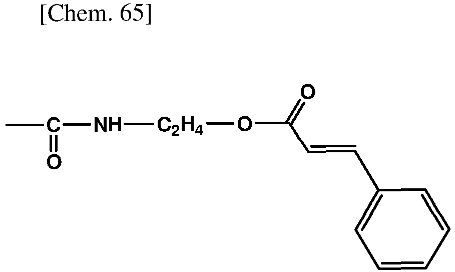

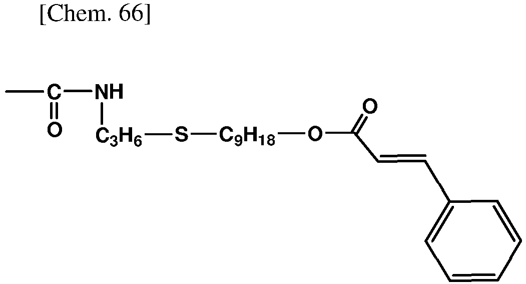

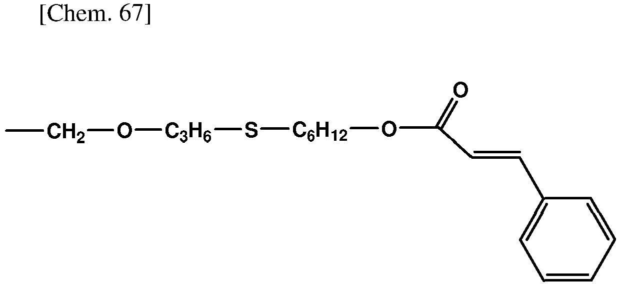

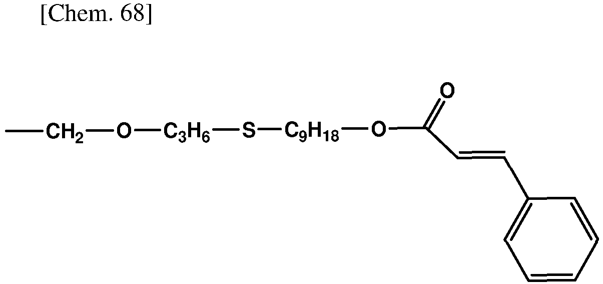

Among these, the following structures are particularly preferred. 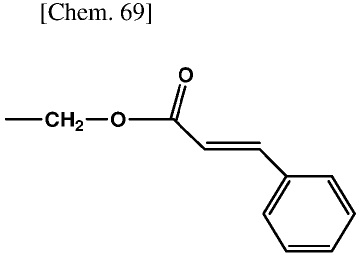 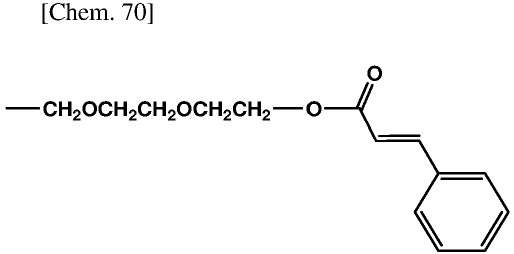 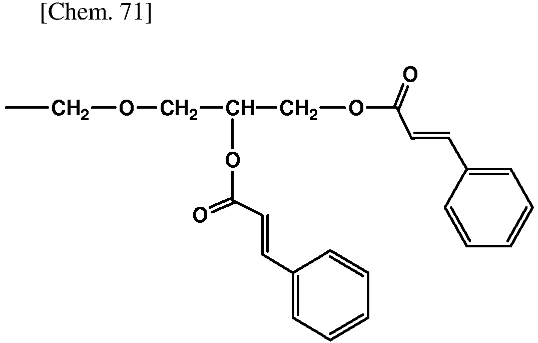 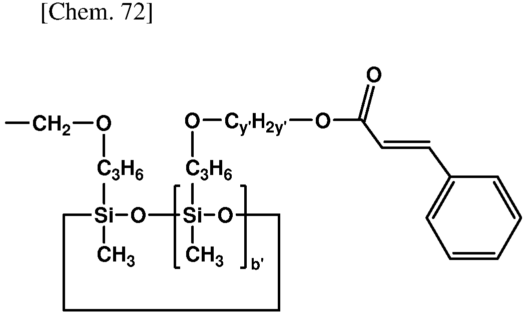 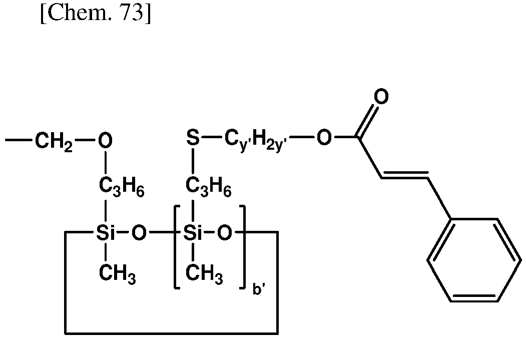 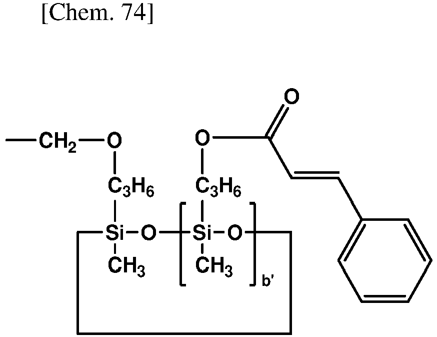 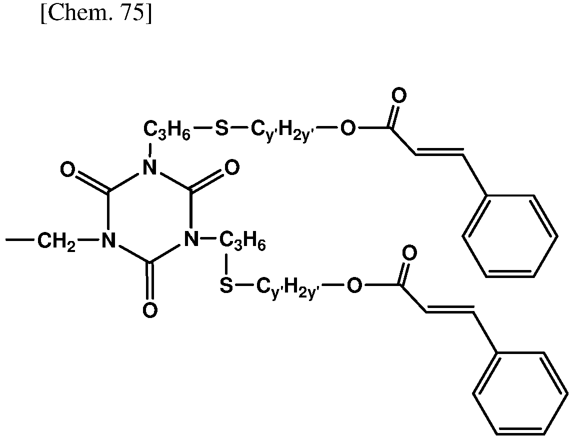 wherein b' is as defined above; and y' is independently for each unit an integer of 2 to 10.

Specific examples of methods for producing the fluoropolyether group-containing compound in the present invention include, but are not limited to, the following two methods.

### [Production Method 1]

A first production method involves forming an ester bond by causing a fluoropolyether group-containing alcohol compound to react with an acid halide represented by the general formula (3) below. 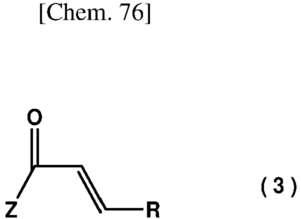 wherein R is as defined above; and Z is a halogen atom, particularly preferably a chlorine atom.

Examples of the acid halide represented by the formula (3) include trans-cinnamoyl chloride, trans-4-methylcinnamoyl chloride, trans-3-methylcinnamoyl chloride, trans-2-methylcinnamoyl chloride, trans-4-(trifluoromethyl)cinnamoyl chloride, trans-4-bromocinnamoyl chloride, trans-3-bromocinnamoyl chloride, trans-2-bromocinnamoyl chloride, trans-4-fluorocinnamoyl chloride, trans-3-fluorocinnamoyl chloride, trans-2-fluorocinnamoyl chloride, trans-4-methoxycinnamoyl chloride, trans-3-methoxycinnamoyl chloride, trans-2-methoxycinnamoyl chloride, trans-4-hexadecyloxycinnamoyl chloride, trans-3-bromo-4-hexadecyloxycinnamoyl chloride, and trans-3-bromo-4-methoxycinnamoyl chloride. Among these, trans-cinnamoyl chloride is preferred.

The fluoropolyether group-containing alcohol compound is not limited in terms of its structure, and examples thereof include those having structures represented by the general formulas (4), (5), (6), and (7) below.

F-Rf-CH₂OH (4)

HOCH₂-Rf-CH₂OH (5)

HO(CH₂CH₂O)_{z1}CH₂-Rf-CH₂(OCH₂CH₂)_{z1}OH (6)

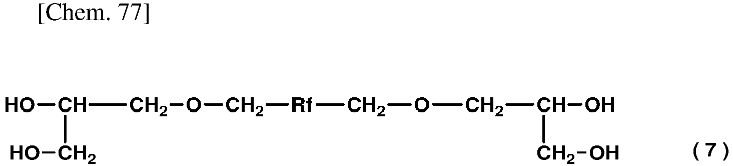

wherein Rf is as defined above; and z1 is independently an integer of 1 to 6.

Examples of commercially available fluoropolyether group-containing alcohol compounds having a hydroxy group at its terminal include Fomblin D series, such as Fomblin D2, Fomblin D4000, and Fomblin D6000, Fomblin T4, Fluorolink 5147X, and Fluorolink 5148X available from Solvay Specialty Polymers Co., Ltd.

Examples of suitable known structures of the fluoropolyether group-containing alcohol compound include the following compounds exemplified in JP-A 2013-237824 (Patent Document 4),

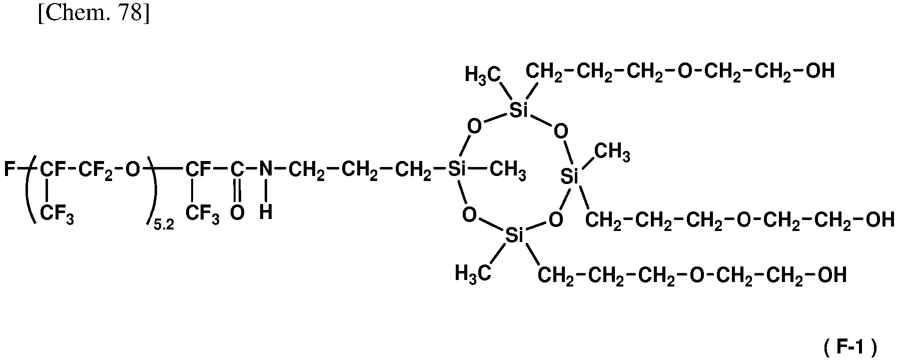

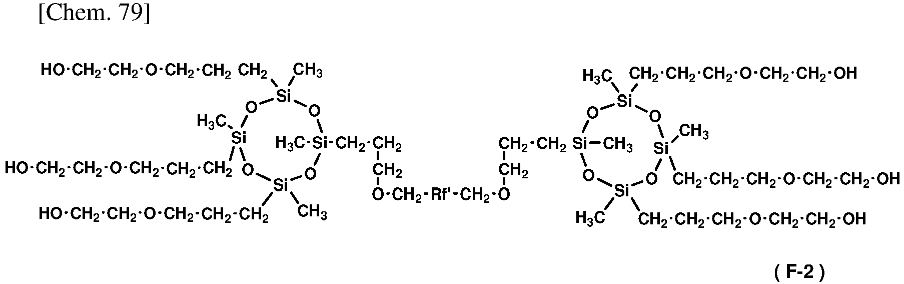

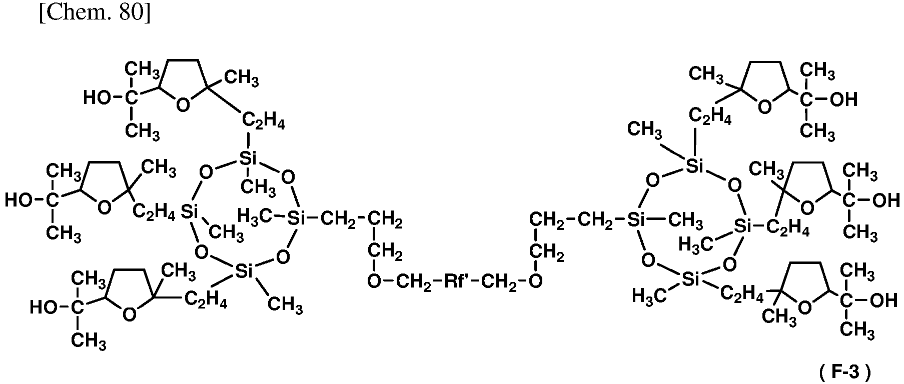

Rf': -CF₂(OCF₂CF₂)_{q}(OCF₂)ₚOCF₂-

(q / p = 0.9, p + q ≈ 45),
the following compounds exemplified in JP-A 2015-189843 (Patent Document 5),

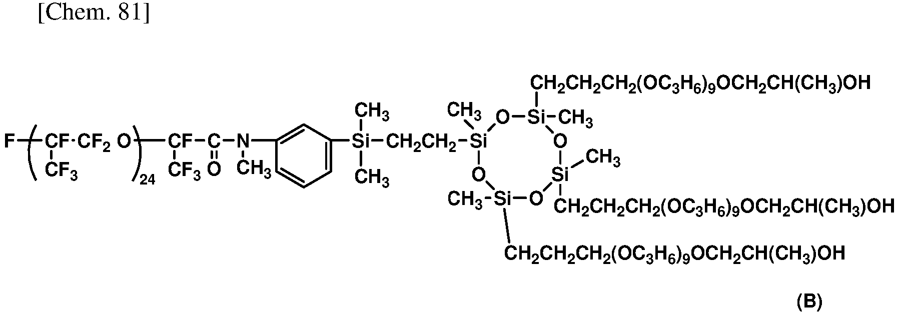

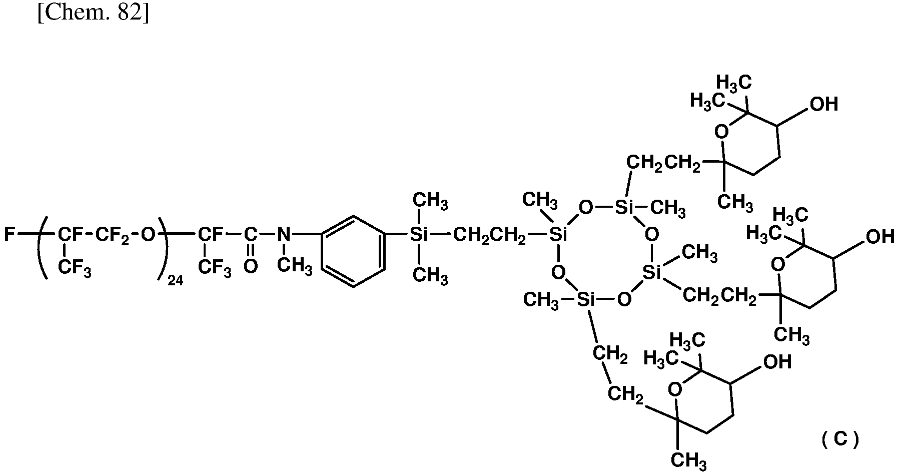

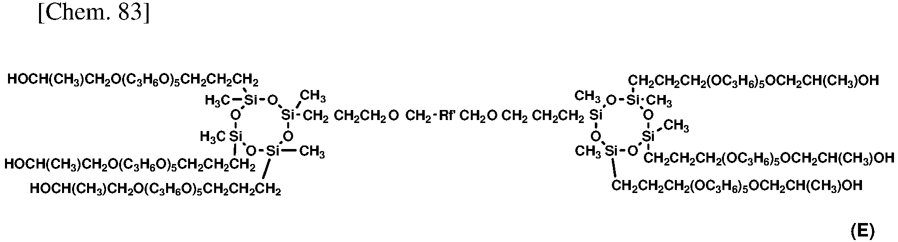

   Rf': -CF₂(OCF₂CF₂)_{q}(OCF₂)ₚOCF₂-

   (q / p = 0.9, p + q ≈ 45),
the following compounds exemplified in JP-A 2017-190429 (Patent Document 6),

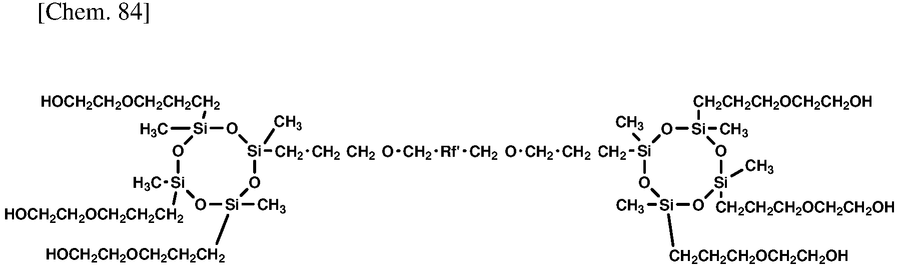

   Rf': -CF₂O(CF₂O)ₚ₂(CF₂CF₂O)_{q2}CF₂-

   (q2 / p2 = 1.2, p2 + q2 ≈ 18.5),
the following compounds exemplified in JP-A 2021-175782 (Patent Document 7),

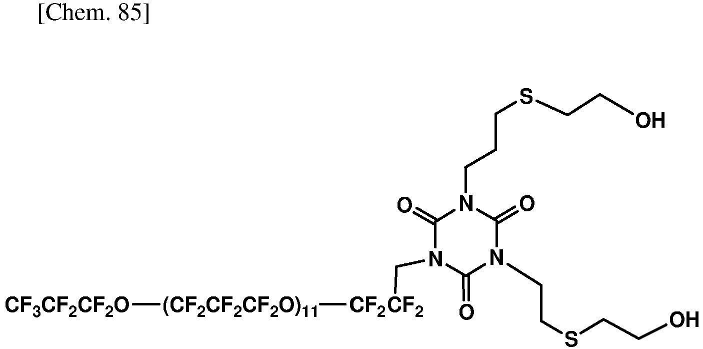

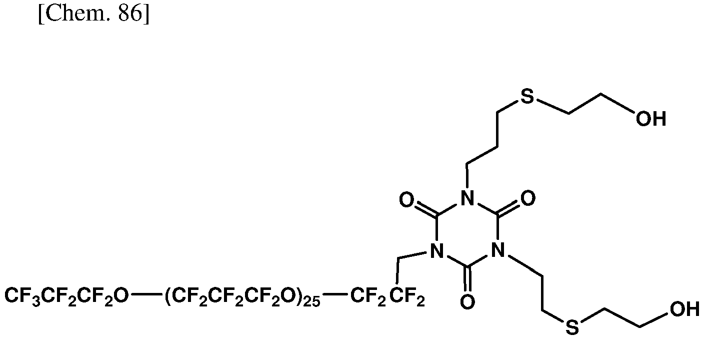

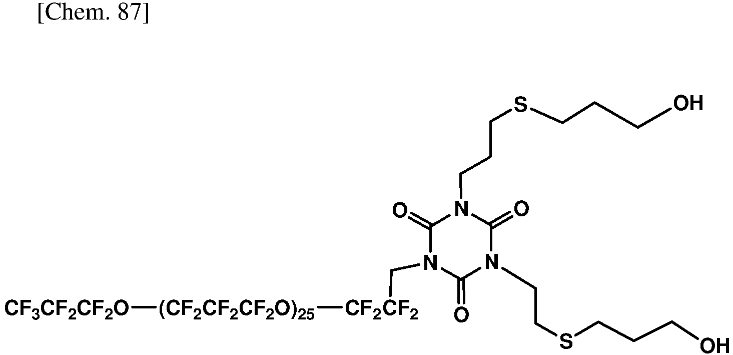

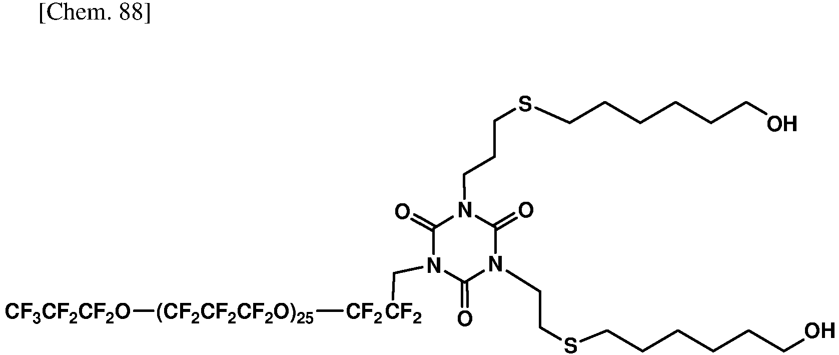

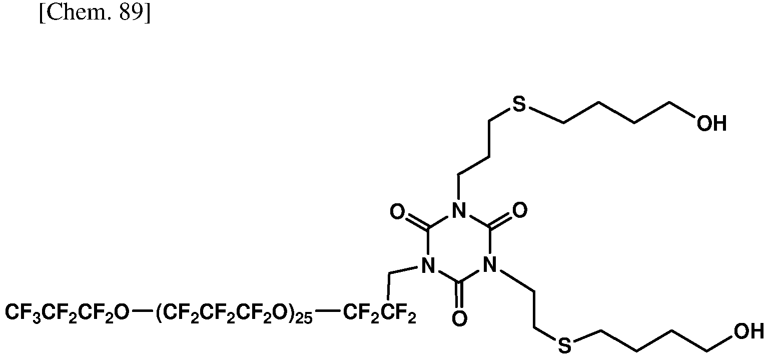

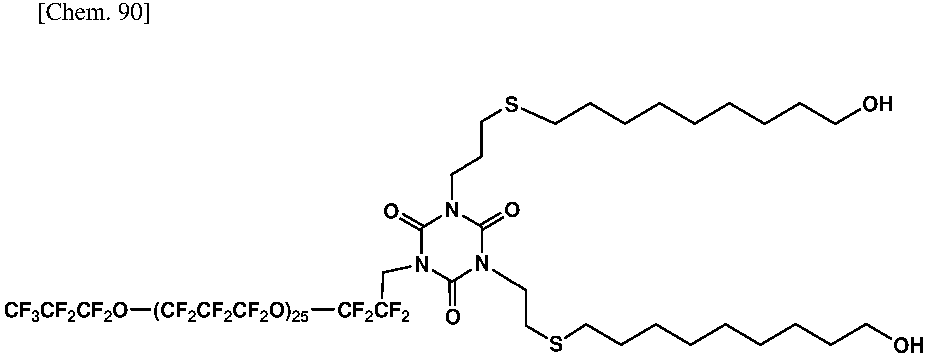

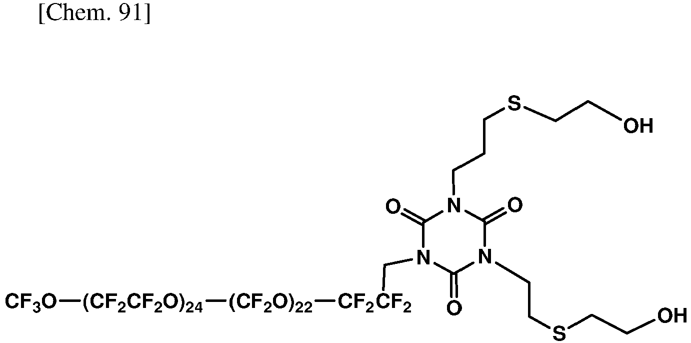

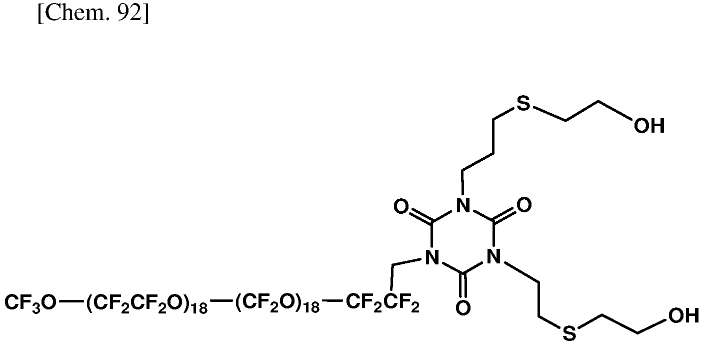

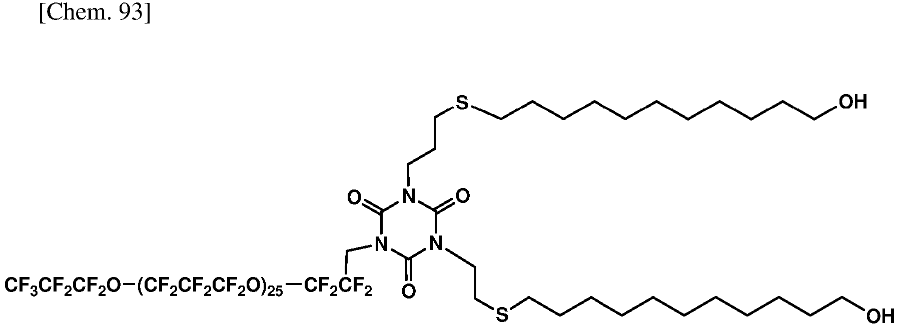

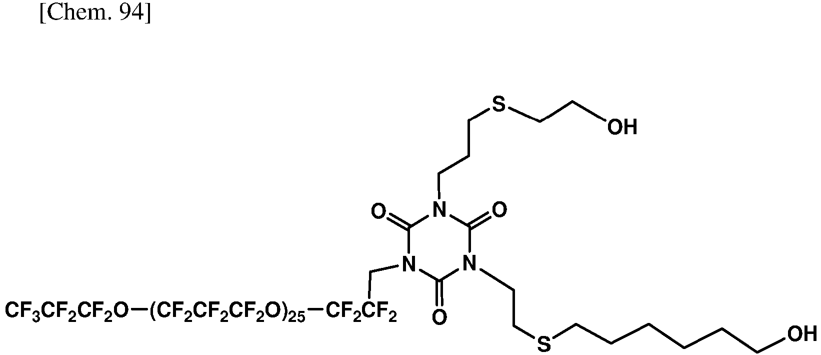

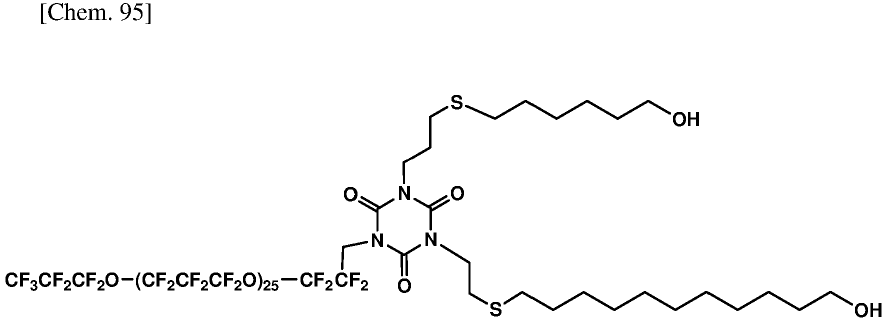

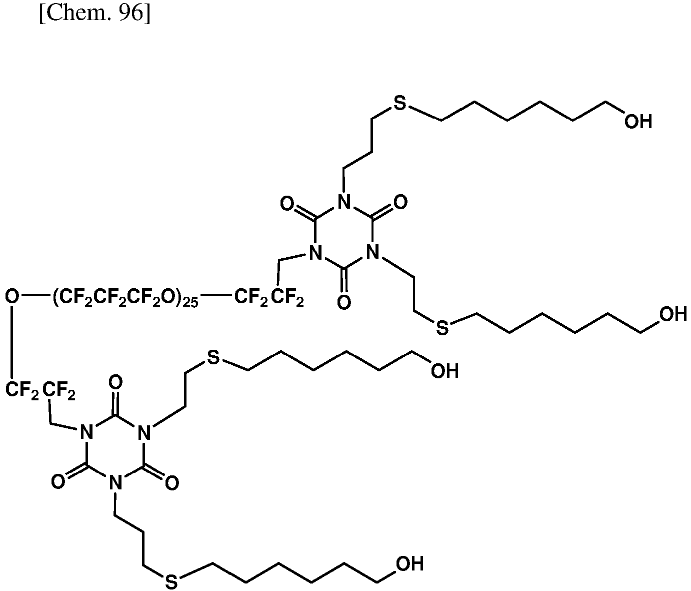

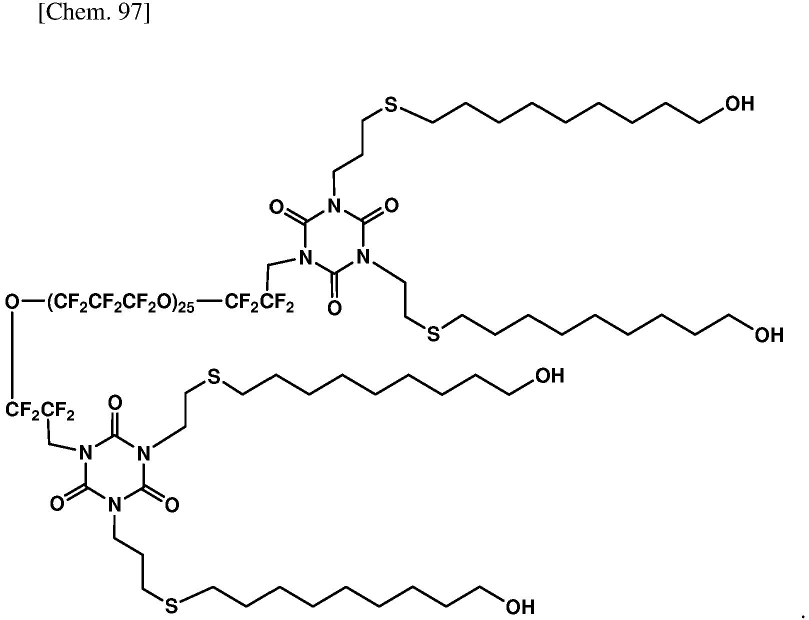

In the first production method, the fluoropolyether group-containing alcohol compound reacts with the acid halide represented by the formula (3) to form an ester bond.

To cause the reaction, the acid halide represented by the formula (3) is preferably fed in an amount that is at least equimolar to the total amount of the hydroxy groups of the fluoropolyether group-containing alcohol compound, so that all the hydroxy groups are reacted with the acid halide. When the fluoropolyether group-containing alcohol compound has multiple hydroxyl groups, the amount of the acid halide is sufficient to introduce the monovalent group represented by the formula (1) into at least one hydroxyl group. Specifically, the reaction is desirably carried out by using the acid halide represented by the formula (3) in a molar amount of 0.5 to 6 times, especially 0.7 to 4 times greater than the molar amount of the hydroxy groups in the fluoropolyether group-containing alcohol compound in the reaction system. If the amount is too large, it is difficult to remove the excess acid halide represented by the formula (3). If the amount is too small, there is a high possibility that the fluoropolyether group-containing alcohol compound that has no monovalent group represented by the formula (1) introduced remains.

The ester-forming reaction where the fluoropolyether group-containing alcohol compound reacts with the acid halide represented by the formula (3) preferably uses an acid acceptor. In the method using the acid acceptor, the fluoropolyether group-containing alcohol compound, the acid halide represented by the formula (3), and the acid acceptor are mixed and stirred. Examples of the acid acceptor include triethylamine, various tertiary amines, diazabicycloundecene, diazabicyclononene, pyridine, urea, and other known compounds.

The amount of the acid acceptor used is desirably about 0.9 to 3 times the moles of the acid halide represented by the formula (3). If the amount is too small, more acid remains untrapped. If the amount is too large, it may be difficult to remove the excess acid acceptor.

In the reaction, an appropriate solvent may be used for dilution as necessary. Any solvent may be used for dilution without particular limitations as long as the solvent is inert to the hydroxy group of the fluoropolyether group-containing alcohol compound and the halogen atom of the acid halide represented by the formula (3). Specific examples of the solvent include hydrocarbon solvents, such as toluene, xylene, and isooctane, ether solvents, such as tetrahydrofuran (THF), diisopropyl ether, and dibutyl ether, ketone solvents, such as acetone, methyl ethyl ketone, methyl butyl ketone, methyl isobutyl ketone, and cyclohexanone, fluorine-modified aromatic hydrocarbon solvents, such as m-xylene hexafluoride (also known as hexafluoro-m-xylene), and benzotrifluoride, and fluorine-modified ether solvents, such as methyl perfluorobutyl ether. The solvent may be removed by a well-known method, such as vacuum distillation, after the reaction, or may be used as is as a dilute solution depending on a particular purpose.

The amount of the solvent used is preferably, but not necessarily, up to 10 times the total weight of all the reactants. An excessively large amount of the solvent used may lead to a substantial decrease in the reaction rate.

The reaction is carried out at a temperature of 0 to 150°C, preferably 10 to 90°C, for 1 minute to 500 hours, preferably 10 minutes to 48 hours. At an excessively low reaction temperature, the reaction rate may become too slow. At an excessively high reaction temperature, the generated acid may be difficult to trap.

After completion of the reaction, the unreacted acid halide represented by the formula (3), the solvent, the acid acceptor, and other components are removed by distillation, adsorption, filtration, washing, and other methods to perform purification, whereby the fluoropolyether group-containing compound of the present invention can be obtained.

Specific examples of the fluoropolyether group-containing compound having the monovalent group represented by the formula (1) of the present invention produced by the first production method include the following compounds.

F-Rf-CH₂X^{a}

X^{a}CH₂-Rf-CH₂X^{a}

X^{a}(CH₂CH₂O)_{z1}CH₂-Rf-CH₂(OCH₂CH₂)_{z1}X^{a}

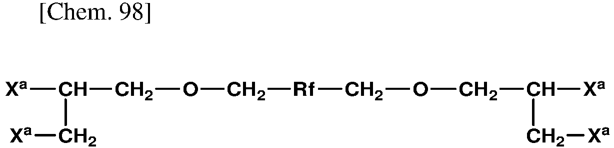

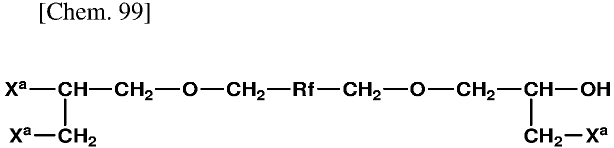

wherein Rf is as defined above; z1 is independently as defined above; and X^{a} is the following group.

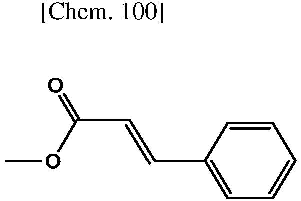

Specific examples of the other structures include those shown below. 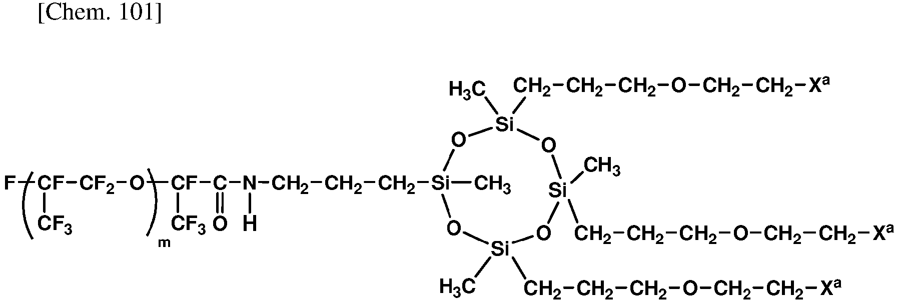 wherein X^{a} and m are as defined above. 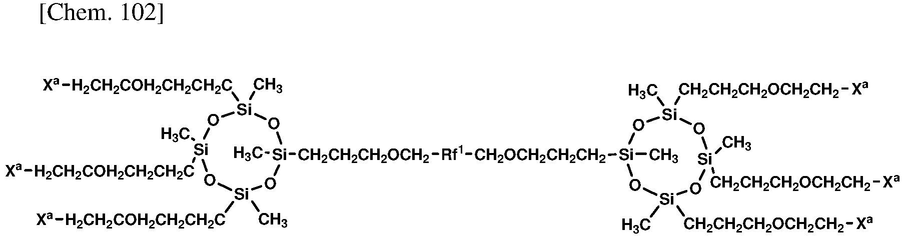 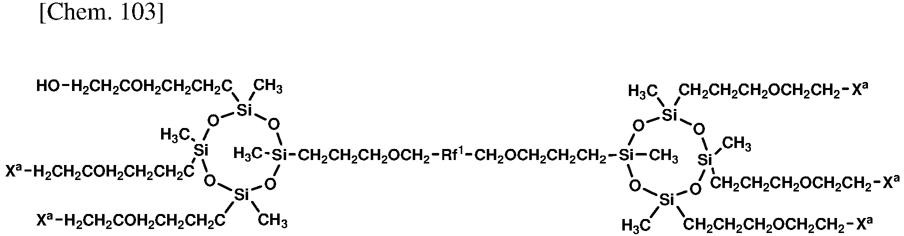 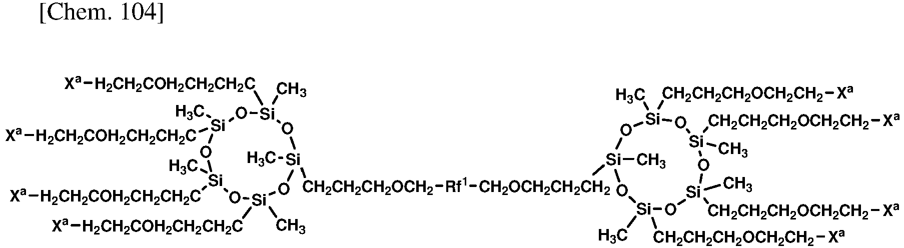 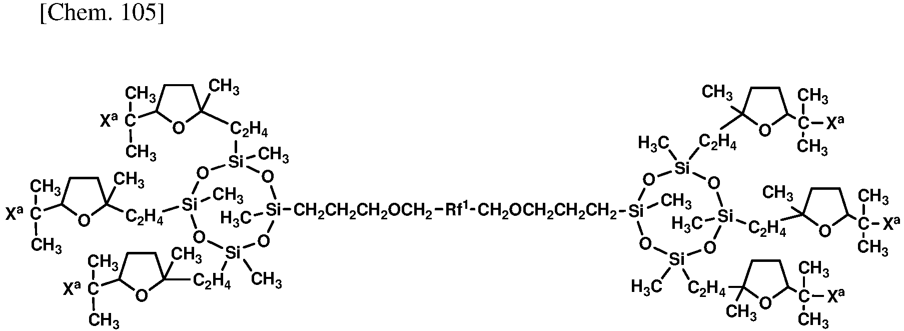 wherein Rf¹ is -CF₂O(CF₂O)_{d1}(CF₂CF₂O)ₑ₁CF₂- or
-CF₂O(CF₂O)_{d1}(CF₂CF₂O)ₑ₁(CF₂CF₂CF₂O)_{f1}CF₂-; and X^{a}, d1, and e1 are as defined above. 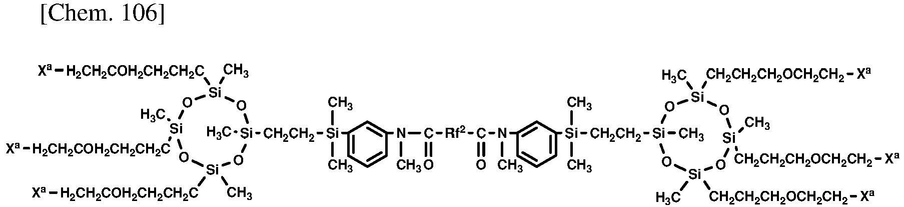 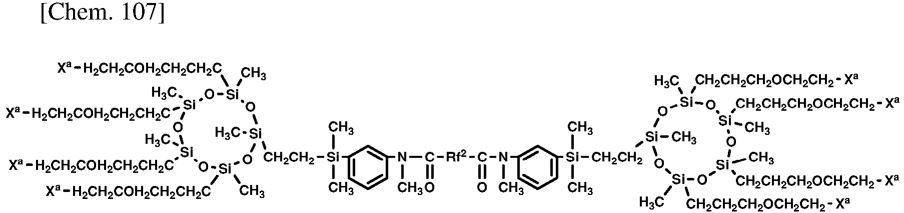 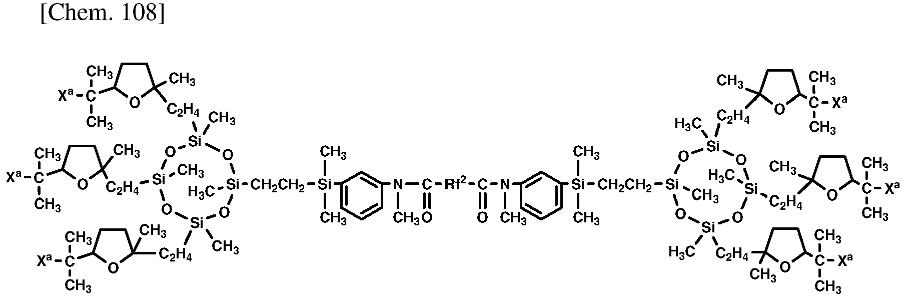 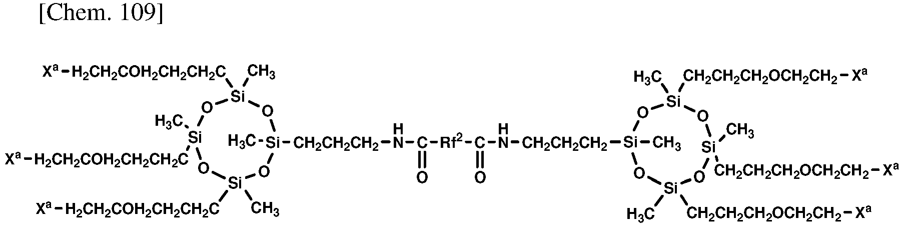 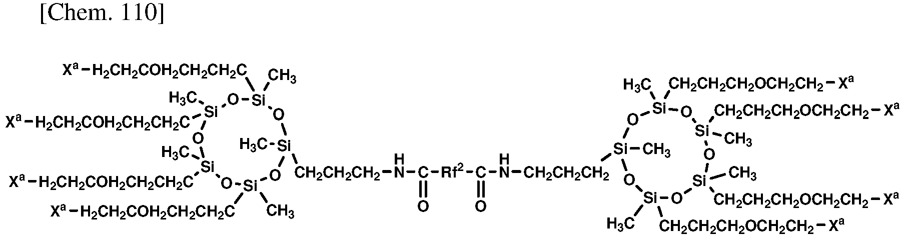 wherein X² is as defined above; and Rf² is a group represented by the following formula: 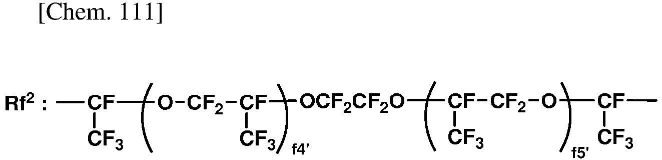 f4', f5', and the sum of f4' and f5' are as defined above. 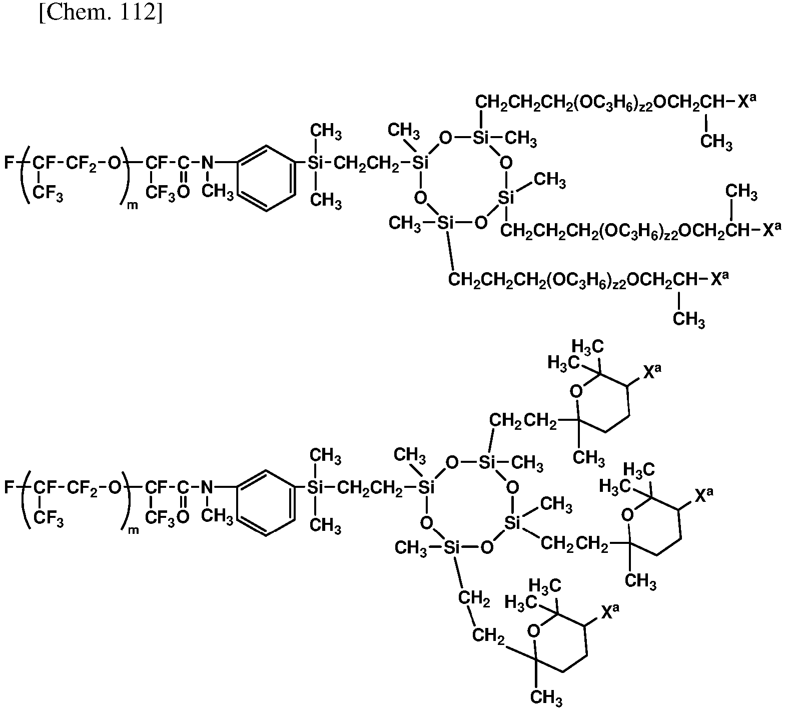 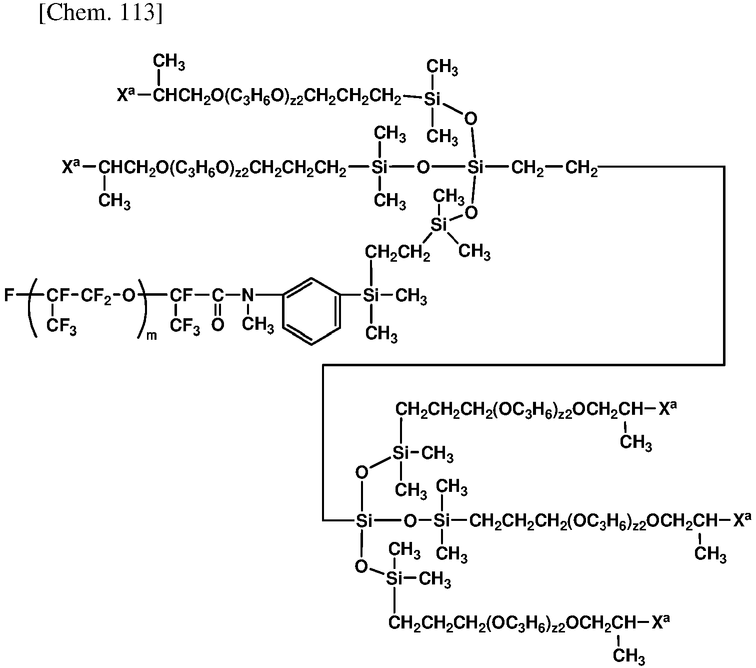 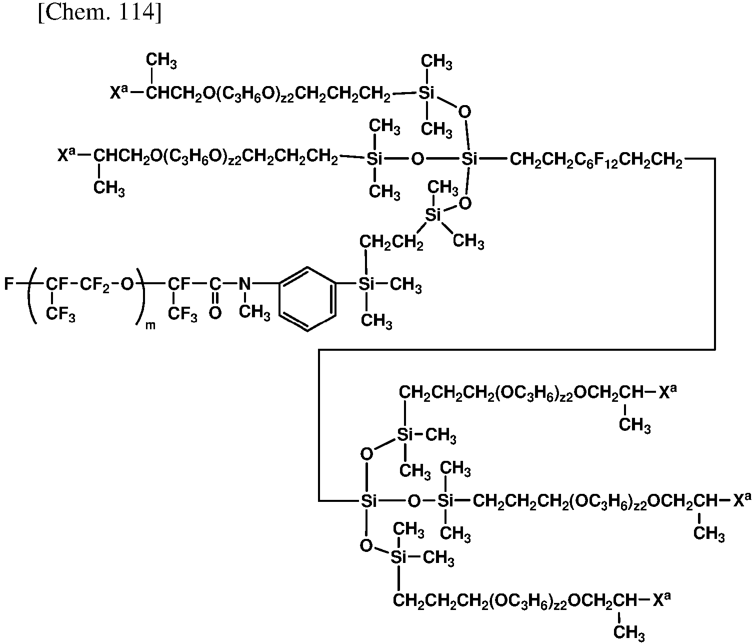 wherein X^{a} and m are as defined above; and z2 is independently an integer of 1 to 6. 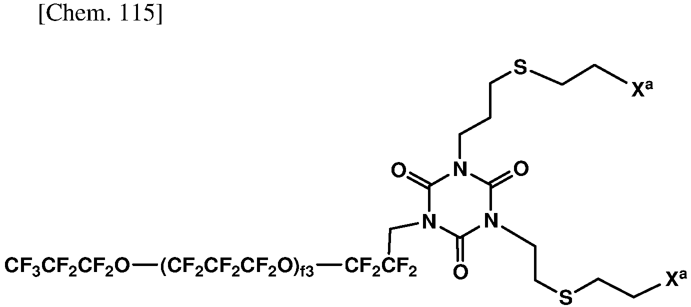 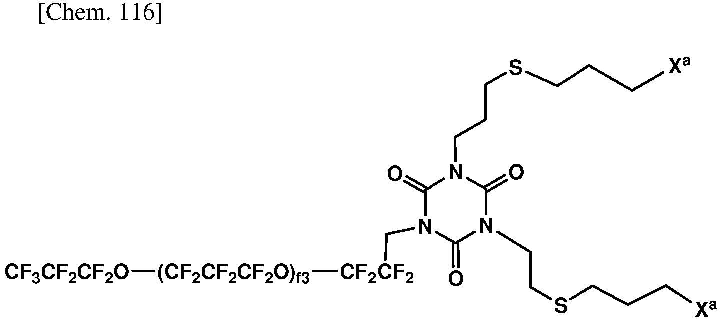 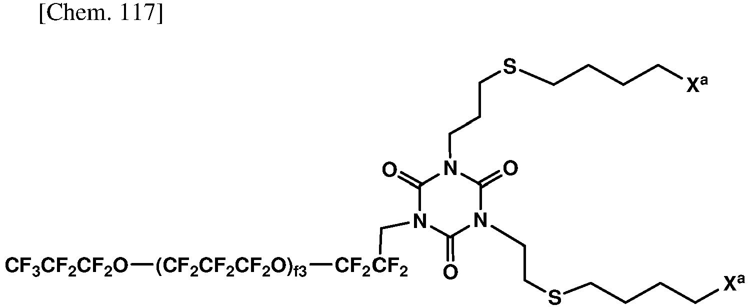 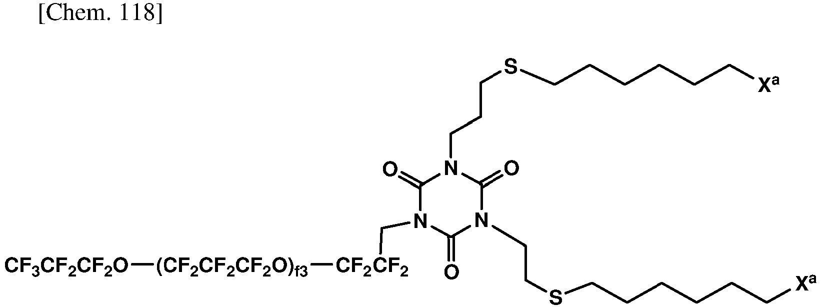 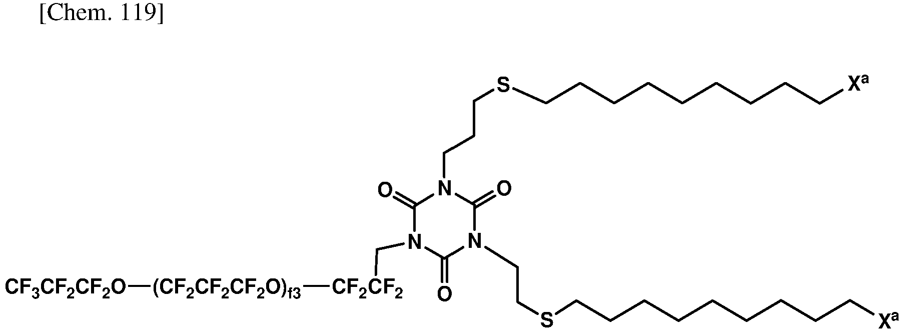 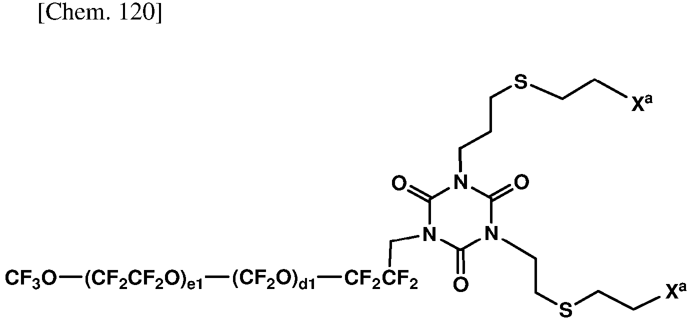 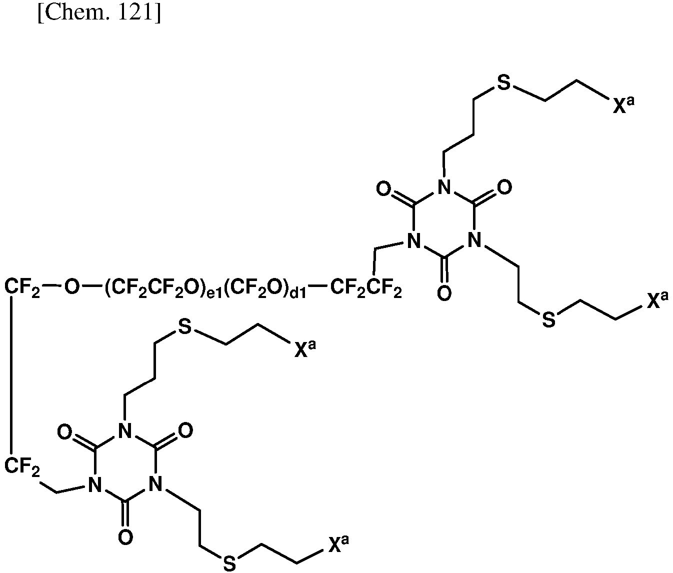 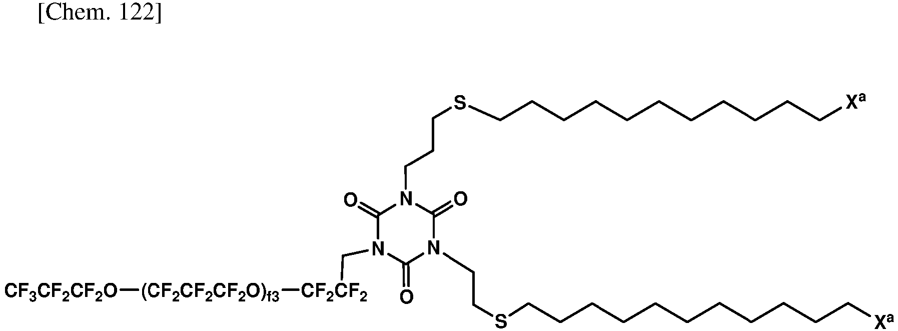 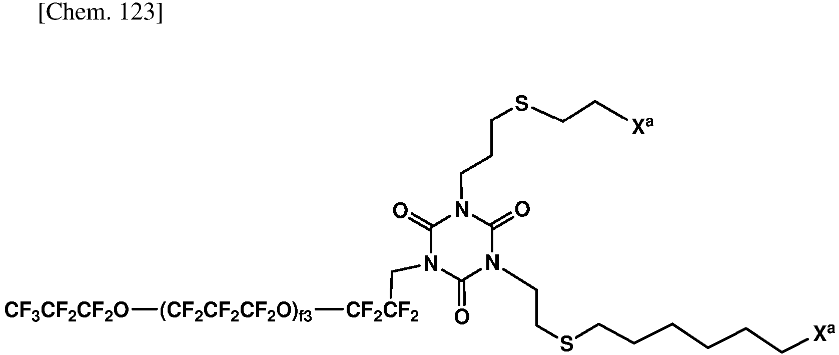 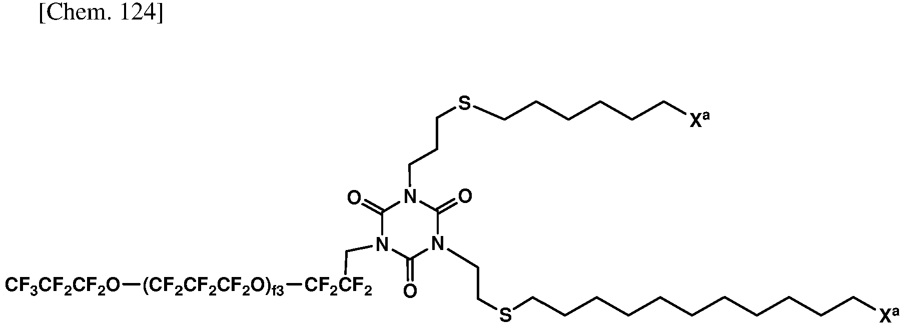 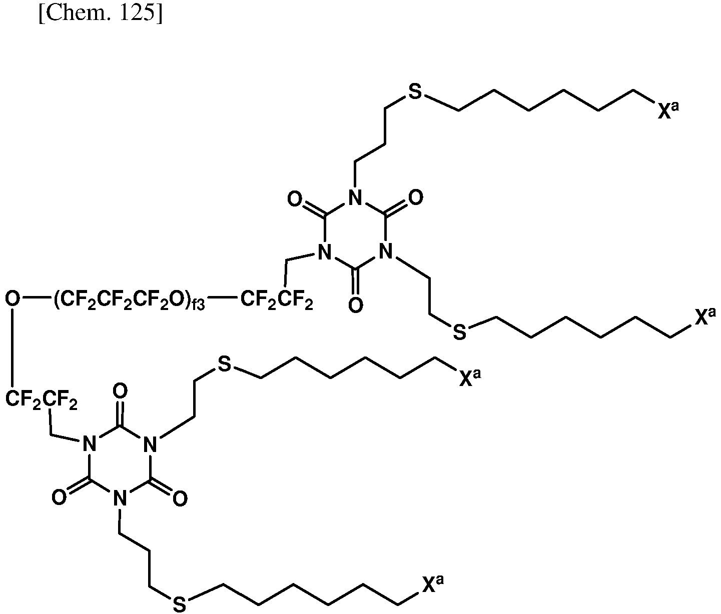 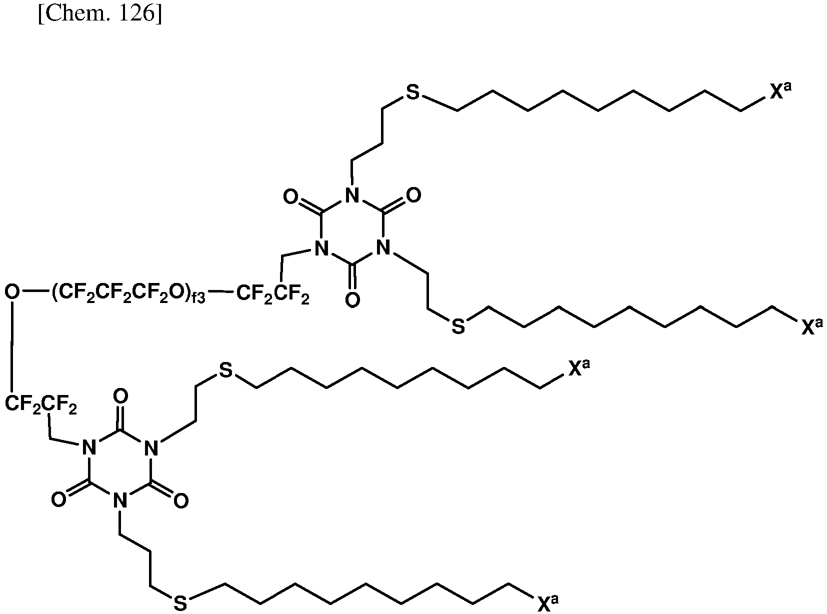 wherein X^{a}, d1, e1, the sum of d1 and e1, and f3 are as defined above.

### [Production Method 2]

A second production method for the fluoropolyether group-containing compound of the present invention involves adding, to a compound having a SiH group at the terminal of the fluoropolyether group, a compound represented by the general formula (8) below: 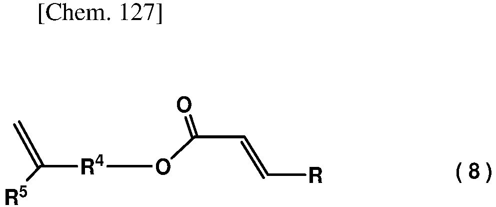 wherein R is as defined above; R⁴ is a divalent organic group; and R⁵ is a hydrogen atom or a monovalent organic group.

In the formula (8), R is as defined above.

R⁴ is a divalent organic group, preferably a C₁-C₁₈ divalent hydrocarbon group, and may contain an oxygen atom, a nitrogen atom, or a sulfur atom, and R⁴ is preferably a methylene group, an ethylene group, a propylene group, a butylene group, a pentene group, a hexylene group, or a divalent ether structure composed of these groups and ether-bonded oxygen. R⁴ is particularly preferably a methylene group.

R⁵ is a hydrogen atom or a monovalent organic group, preferably a hydrogen atom or a C₁-C₈ hydrocarbon group, more preferably a hydrogen atom or a methyl group.

Examples of the compound represented by the formula (8) include those shown below.

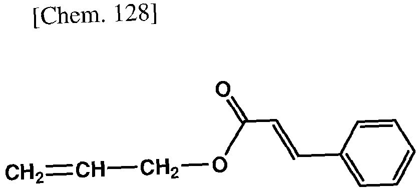

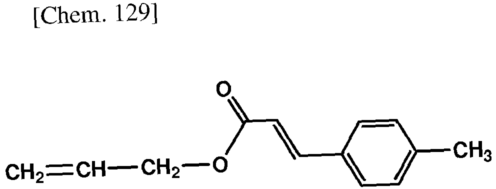

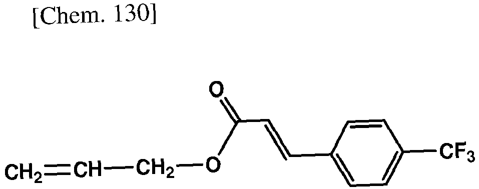

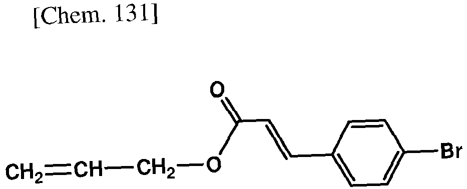

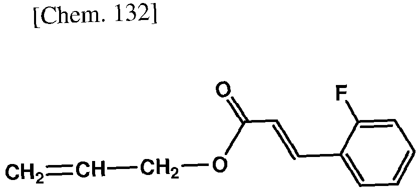

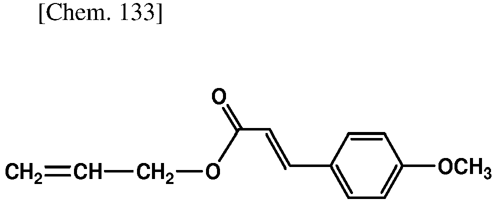

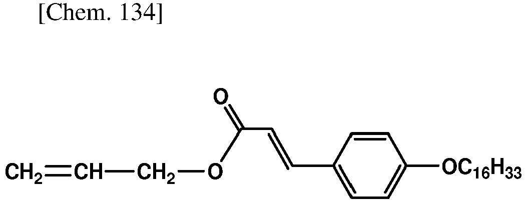

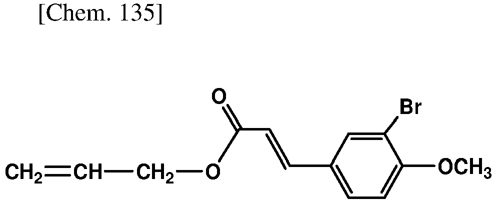

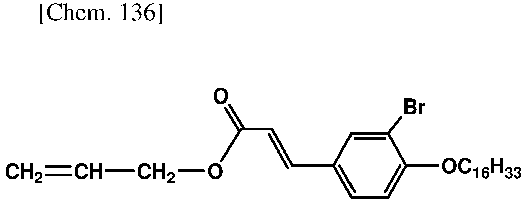

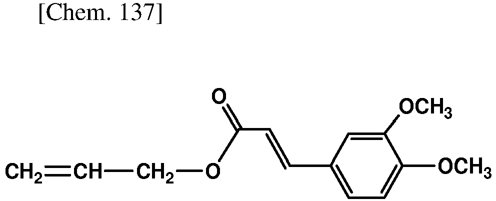

The compound having a SiH group at the terminal of the fluoropolyether group is not limited in terms of its structure and can be obtained by carrying out the addition reaction of a fluoropolyether compound (i) of (9) to (19) having an olefin at its terminal shown below. 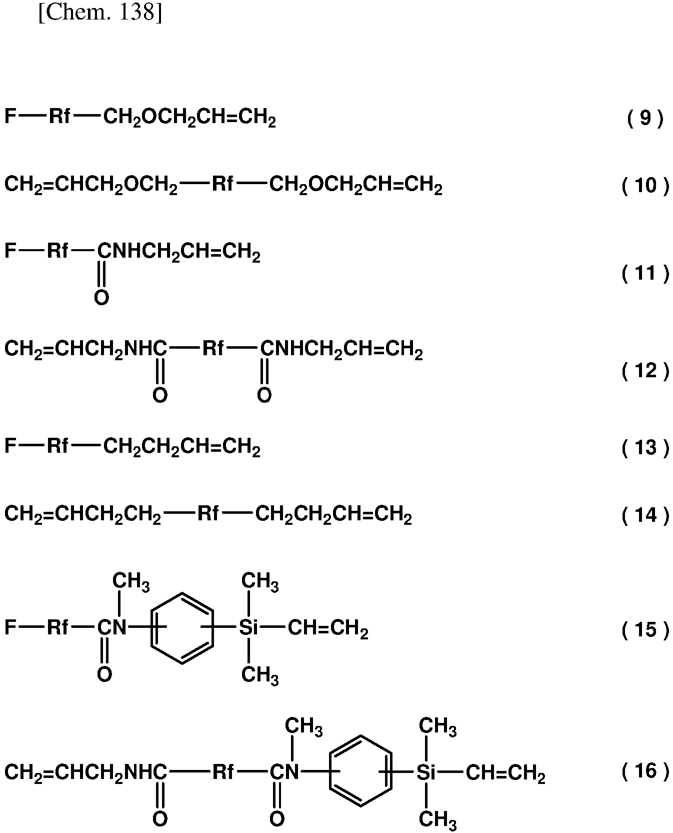 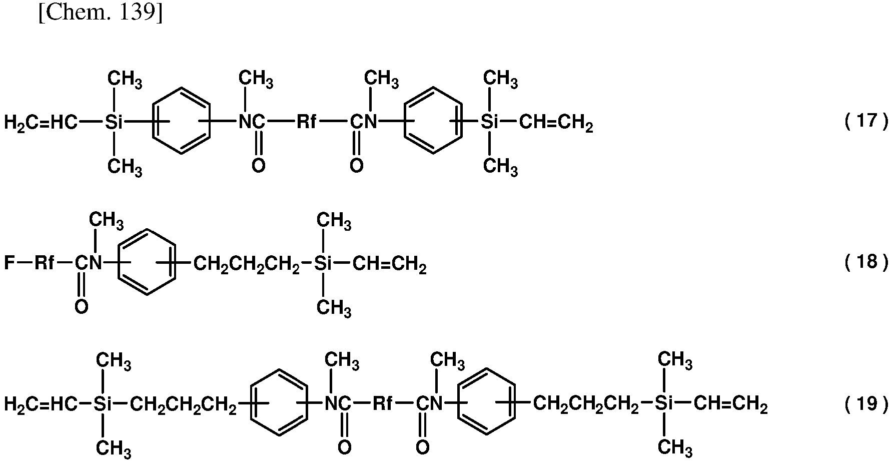 (wherein Rf is as defined above.)
with a polyfunctional SiH compound (ii) having two or more SiH groups in one molecule shown in the following group 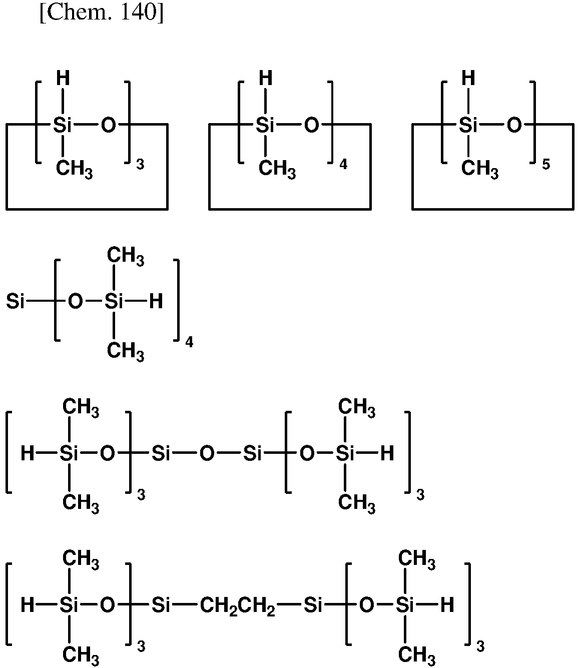 in the presence of a platinum group metal-based addition reaction catalyst.

In this reaction, one terminal olefin structure of one molecule of the fluoropolyether compound (i) preferably reacts with one molecule of the polyfunctional SiH compound (ii), and the unreacted polyfunctional SiH compound (ii) is preferably removed by vacuum distillation or other methods after the addition reaction using an excess amount of the polyfunctional SiH compound (ii) relative to the terminal carbon-carbon double bond group, such as aryl group, of the fluoropolyether compound (i). The reaction is preferably carried out in the presence of 1 to 10 equivalents, especially 2 to 6 equivalents, of the polyfunctional SiH compound (ii) per equivalent of the terminal olefin group, such as allyl group, of the fluoropolyether compound (i).

The addition reaction catalyst may be, for example, a compound containing platinum, rhodium, or palladium. In particular, the addition reaction catalyst is preferably a compound containing platinum, such as hexachloroplatinic(IV) acid hexahydrate, platinum carbonylvinylmethyl complex, platinum-divinyltetramethyldisiloxane complex, platinum-cyclovinylmethylsiloxane complex, platinum-octylaldehyde/octanol complex, or platinum supported on activated carbon. The compounding amount of the addition reaction catalyst is such that the amount of the contained metal is preferably 0.1 to 5,000 ppm by weight, more preferably 1 to 1,000 ppm by weight relative to the polyfunctional SiH compound (ii).

The above addition reaction can be carried out without a solvent, but a solvent may be used for dilution as necessary. In this case, the diluent solvent may be a widely used common organic solvent, such as toluene, xylene, or isooctane. The diluent solvent preferably has a boiling point higher than or equal to a target reaction temperature, does not inhibit the reaction, and can dissolve, at the reaction temperature, the compound produced after the reaction. Preferred examples of the solvent include partially fluorine-modified solvents, for instance, fluorine-modified aromatic hydrocarbon solvents, such as m-xylene hexafluoride and benzotrifluoride, and fluorine-modified ether solvents, such as methyl perfluorobutyl ether. In particular, m-xylene hexafluoride is preferred.

The amount of the solvent used is preferably, but not necessarily, up to 10 times the total weight of all the reactants. An excessively large amount of the solvent used may lead to a substantial decrease in the reaction rate.

In the addition reaction, the components may be fed in any order. For example, a mixture of the fluoropolyether compound (i), the polyfunctional SiH compound (ii), and the addition reaction catalyst may be gradually heated from room temperature (23 ± 15°C, the same applies hereinafter) to the addition reaction temperature; the addition reaction catalyst may be added after a mixture of the fluoropolyether compound (i), the polyfunctional SiH compound (ii), and the diluent solvent is heated to a desired reaction temperature; the fluoropolyether compound (i) may be added dropwise to a mixture of the polyfunctional SiH compound (ii) and the addition reaction catalyst heated to a desired reaction temperature; or a mixture of the fluoropolyether compound (i) and the addition reaction catalyst may be added dropwise to the polyfunctional SiH compound (ii) heated to a desired reaction temperature. Of these methods, the following is particularly preferred: the addition reaction catalyst is added after a mixture of the fluoropolyether compound (i), the polyfunctional SiH compound (ii), and the diluent solvent is heated to a desired reaction temperature; or a mixture of the fluoropolyether compound (i) and the addition reaction catalyst is added dropwise to the polyfunctional SiH compound (ii) heated to a desired reaction temperature. These methods can be used by diluting each component or the mixture with a solvent as necessary. The above reaction is desirably carried out under a dry atmosphere in air or inert gas (e.g., N₂, Ar) at a reaction temperature of 50 to 150°C, preferably 60 to 120°C, for 0.5 to 96 hours, preferably 1 to 48 hours.

Examples of known compounds having a SiH group at the terminal of the fluoropolyether group thus obtained include the following compounds exemplified in JP-A 2015-189843 (Patent Document 5).

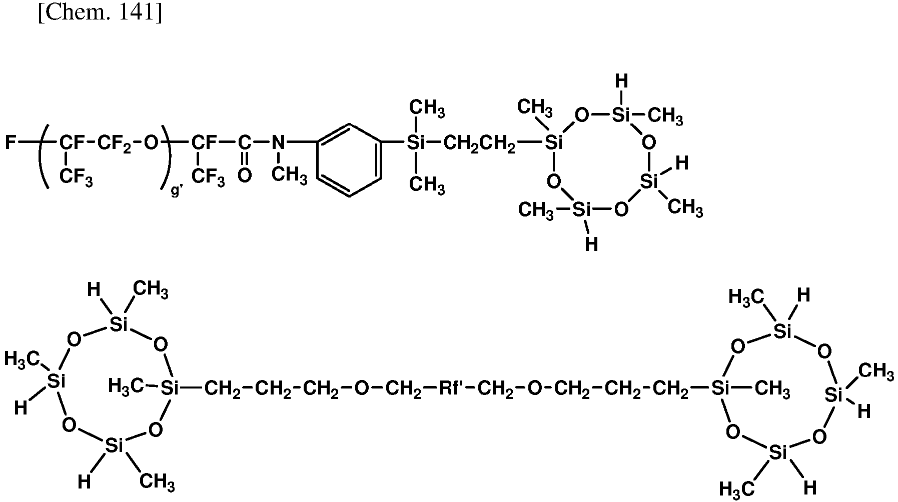

Rf': -CF₂(OCF₂CF₂)_{q1}(OCF₂)ₚ₁OCF₂-

(q1 / p1 = 0.8 to 1.5, p1 + q1 = 5 to 80)
wherein g' is an integer of 2 to 100, preferably an integer of 2 to 50. 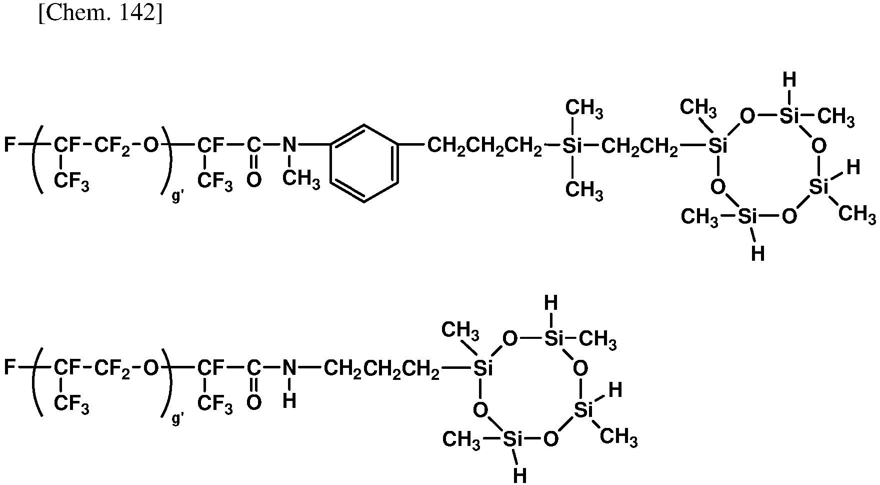 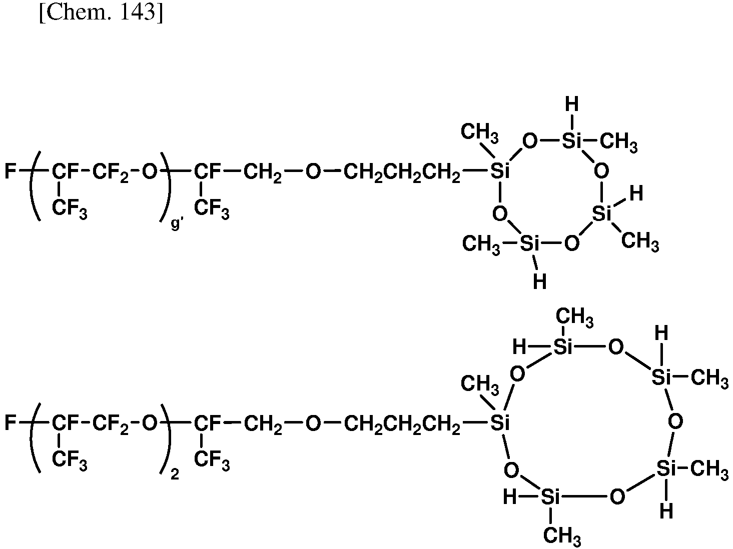 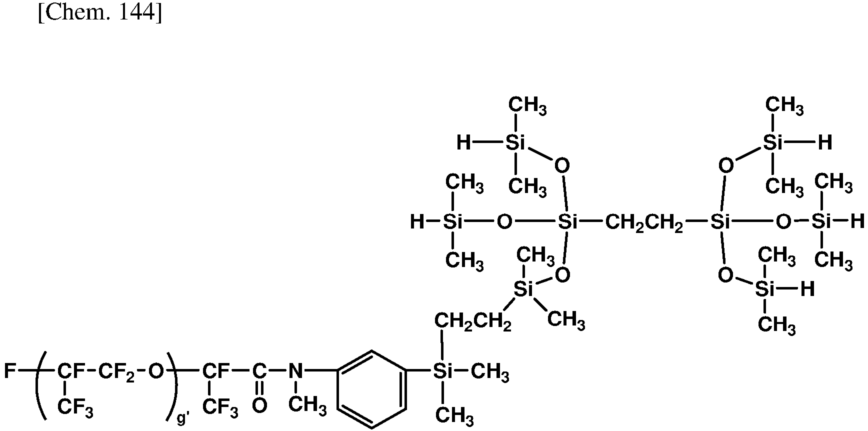
wherein g' is as defined above.

In the second production method, the fluoropolyether group-containing compound of the present invention can be synthesized by carrying out the addition reaction between the compound having a SiH group at the terminal of the fluoropolyether group and the compound represented by the formula (8) in the presence of a platinum group metal-based addition reaction catalyst.

In this reaction, the SiH group of the compound having a SiH group at the terminal of the fluoropolyether group preferably reacts only with the terminal olefin structure of one molecule of the compound represented by the formula (8) and does not react with the internal olefin of the compound represented by the formula (8). For this, the unreacted compound represented by the formula (8) is preferably removed by vacuum distillation or other methods after the addition reaction using an excess amount of the compound represented by the formula (8) relative to the compound having a SiH group at the terminal of the fluoropolyether group. The reaction is preferably carried out in the presence of 1 to 10 equivalents, especially 1.05 to 2 equivalents, of the compound represented by the formula (8) per equivalent of the SiH group of the compound having a SiH group at the terminal of the fluoropolyether group.

The addition reaction catalyst may be, for example, a compound containing platinum, rhodium, or palladium. In particular, the addition reaction catalyst is preferably a compound containing platinum, such as hexachloroplatinic(IV) acid hexahydrate, platinum carbonylvinylmethyl complex, platinum-divinyltetramethyldisiloxane complex, platinum-cyclovinylmethylsiloxane complex, platinum-octylaldehyde/octanol complex, or platinum supported on activated carbon.

The compounding amount of the addition reaction catalyst is such that the amount of the contained metal is preferably 0.1 to 5,000 ppm by weight, more preferably 1 to 1,000 ppm by weight relative to the compound having a SiH group at the terminal of the fluoropolyether group.

The above addition reaction can be performed without a solvent, but a solvent may be used for dilution as necessary. In this case, the diluent solvent may be a widely used common organic solvent, such as toluene, xylene, or isooctane. The diluent solvent preferably has a boiling point higher than or equal to a target reaction temperature, does not inhibit the reaction, and can dissolve, at the reaction temperature, the compound produced after the reaction. Preferred examples of the diluent solvent include partially fluorine-modified solvents, for instance, fluorine-modified aromatic hydrocarbon solvents, such as m-xylene hexafluoride and benzotrifluoride, and fluorine-modified ether solvents, such as methyl perfluorobutyl ether. In particular, m-xylene hexafluoride is preferred.

The amount of the solvent used is preferably, but not necessarily, up to 10 times the total weight of all the reactants. An excessively large amount of the solvent used may lead to a substantial decrease in the reaction rate.

In the addition reaction, the components may be fed in any order. For example, a mixture of the compound represented by the formula (8), the compound having a SiH group at the terminal of the fluoropolyether group, and the addition reaction catalyst may be gradually heated from room temperature to the addition reaction temperature; the addition reaction catalyst may be added after a mixture of the compound represented by the formula (8), the compound having a SiH group at the terminal of the fluoropolyether group, and the diluent solvent is heated to a desired reaction temperature; the compound represented by the formula (8) may be added dropwise to a mixture of the compound having a SiH group at the terminal of the fluoropolyether group and the addition reaction catalyst heated to a desired reaction temperature; or a mixture of the compound having a SiH group at the terminal of the fluoropolyether group and the addition reaction catalyst may be added dropwise to the compound represented by the formula (8) heated to a desired reaction temperature. Of these methods, the following is particularly preferred: the addition reaction catalyst is added after a mixture of the compound represented by the formula (8), the compound having a SiH group at the terminal of the fluoropolyether group, and the diluent solvent is heated to a desired reaction temperature; or a mixture of the compound having a SiH group at the terminal of the fluoropolyether group and the addition reaction catalyst is added dropwise to the compound represented by the formula (8) heated to a desired reaction temperature. These methods can be used by diluting each component or the mixture with a solvent as necessary. The above reaction is desirably carried out under a dry atmosphere in air or inert gas (e.g., N₂, Ar) at a reaction temperature of 50 to 150°C, preferably 60 to 120°C, for 0.5 to 96 hours, preferably 1 to 48 hours.

After completion of the reaction, the unreacted compound represented by the formula (8), the solvent, the addition reaction catalyst, and other components are removed by distillation, adsorption, filtration, washing, and other methods to perform purification, whereby the fluoropolyether group-containing compound of the present invention can be obtained.

Specific examples of the fluoropolyether group-containing compound having the monovalent group represented by the formula (1) of the present invention produced by the second production method include the following compounds. 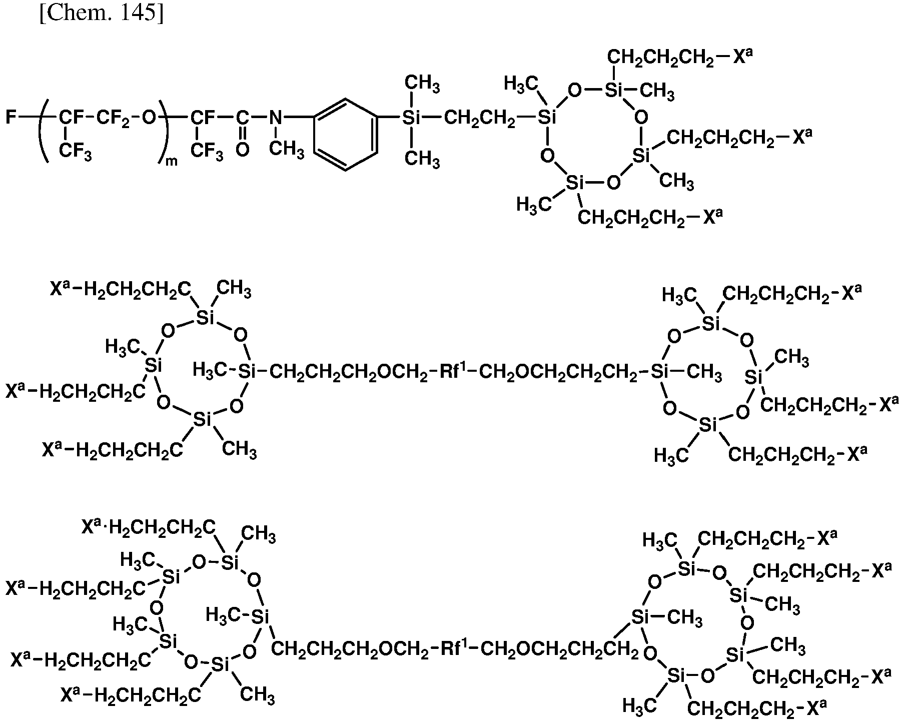 wherein Rf¹, m, and X^{a} are as defined above. 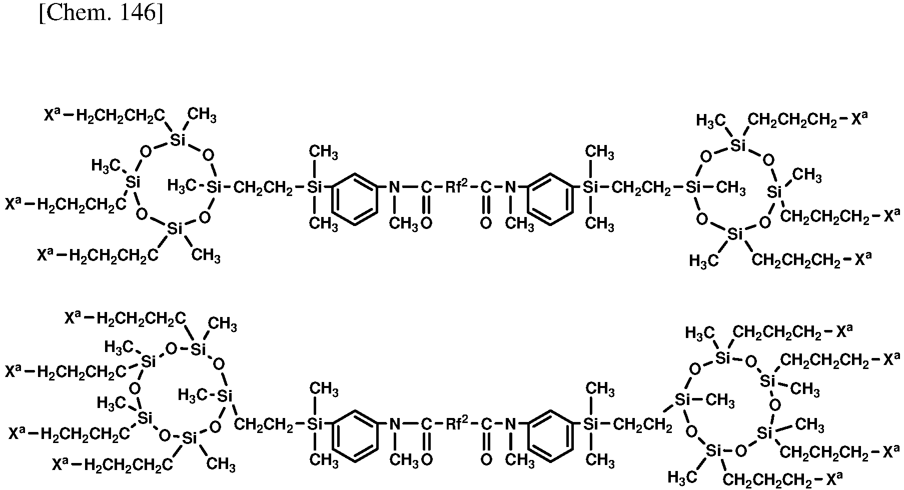 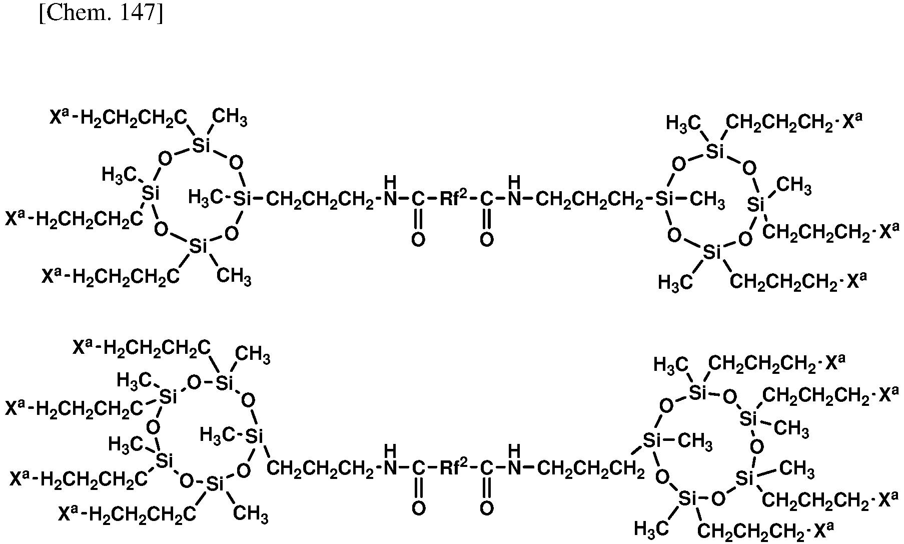 wherein Rf² and X^{a} are as defined above. 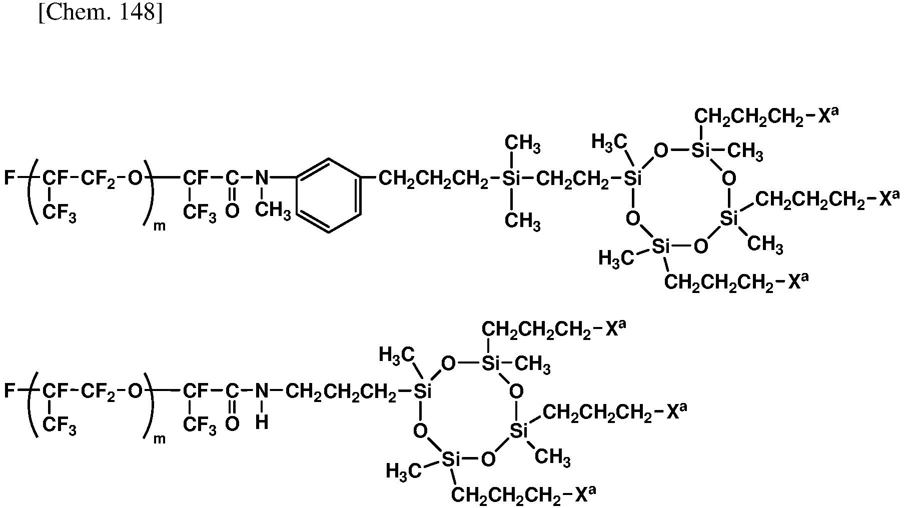 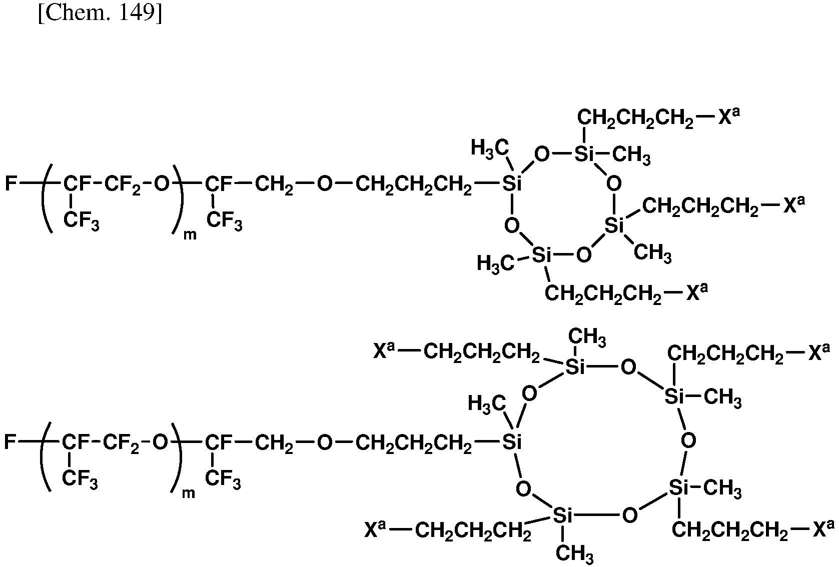 wherein m and X^{a} are as defined above.

Examples of the fluoropolyether group-containing compound having the monovalent group represented by the formula (1) produced as described above can be used as a component of the photocrosslinkable fluoropolyether composition.

The photocrosslinkable fluoropolyether composition according to one embodiment of the present invention contains a fluoropolyether group-containing compound having the monovalent group represented by the formula (1) above. The amount of the fluoropolyether group-containing compound having the monovalent group represented by the formula (1) in the photocrosslinkable fluoropolyether composition is preferably 20 to 100 % by weight, more preferably 60 to 100 % by weight.

The fluoropolyether group-containing compound having the monovalent group represented by the formula (1) above can be cured by forming a crosslinked structure through the intermolecular crosslinking reaction via the dimerization reaction of the monovalent groups represented by the formula (1) upon irradiation with light including a wavelength in the range of 250 to 350 nm.

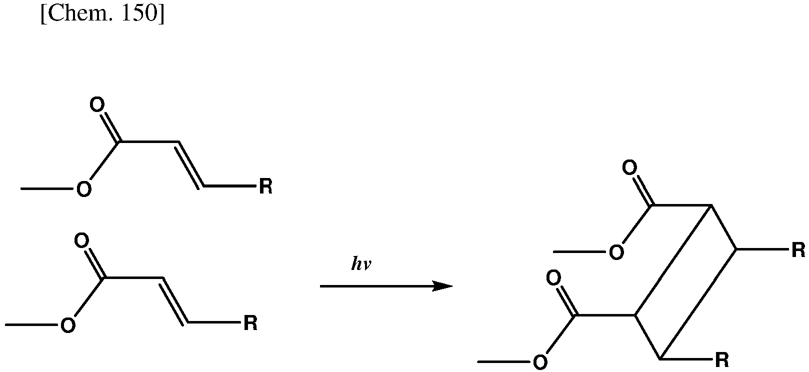

This reaction basically does not require addition of photopolymerization initiators or other components, is relatively thermally stable when stored under light-shielded conditions, and can be stored for a long period of time without addition of polymerization inhibitors or other stabilizers.

In the photocrosslinkable fluoropolyether composition of the present invention, a fluoropolyether group-containing compound having three or more monovalent groups represented by the formula (1) in its molecule is preferably used singly or in combination with a fluoropolyether group-containing compound having one or two monovalent groups represented by the formula (1) in its molecule to control the viscosity of the composition before crosslinking, the density of a desired crosslinked structure, and the physical properties of the crosslinked product.

The photocrosslinkable fluoropolyether composition according to one embodiment of the present invention forms, for example, coating layers, sealing layers, or three-dimensional objects through coating, potting, or other various forming techniques, and upon irradiation with light, forms crosslinked products that have various properties derived from the fluoropolyether structure, such as water repellency, oil repellency, chemical resistance, solvent resistance, low refractive index, and transparency. The photocrosslinkable fluoropolyether composition can contain optional components unless desired characteristics are impaired.

For example, when forming films or performing potting, the photocrosslinkable fluoropolyether composition may be diluted with various solvents (e.g., organic solvents) at a predetermined ratio for coating or potting.

Examples of the organic solvents include alcohols, such as 1-propanol, 2-propanol, isopropyl alcohol, n-butanol, isobutanol, tert-butanol, and diacetone alcohol; ketones, such as methyl propyl ketone, diethyl ketone, methyl ethyl ketone, methyl isobutyl ketone (MIBK), and cyclohexanone; ethers, such as dipropyl ether, dibutyl ether, anisole, dioxane, ethylene glycol monoethyl ether, ethylene glycol monobutyl ether, propylene glycol monomethyl ether (PGME), and propylene glycol monomethyl ether acetate; esters, such as ethyl acetate, propyl acetate, butyl acetate, and cyclohexyl acetate.

Organic solvents may be fluorinated solvents, and examples thereof include partially fluorine-modified solvents, for instance, fluorine-modified aromatic hydrocarbon solvents, such as m-xylene hexafluoride, benzotrifluoride, hexafluorobenzene, and fluorine-modified ether solvents, such as methyl perfluorobutyl ether; and perfluoropolyether, perfluorocarbon, perfluoroalkylamine, hydrofluorocarbon, hydrochlorofluoroolefin, and hydrofluoroolefin solvents. Examples of commercially available organic solvents include ASAHIKULN AE-3000 and AMOLEA AS-300 avaiable from AGC Inc.; Vertrel and Opteon available from The Chemours Company; Fluorinert available from 3M Company; Celefin available from Central Glass Co., Ltd., and Galden available from Solvay S.A. The above organic solvents may be used singly or as a mixture of two or more, regardless of whether they contain fluorine. The irradiation with light for crosslinking may be carried out after the solvent is removed by heating, blowing air, reducing pressure, or other methods, or while part of the solvent still remains.

For example, when emphasis is placed on low refractive index properties and low reflection properties obtained by using low refractive index properties, the particles having various configurations and made of metal oxides, metal nitrides, metal sulfides, metal halides, or other materials can be mixed. Examples of the composition of the particles include NaF, KF, CaF₂, MgF₂, and SiO₂. Examples of the shape of the particles include structures, such as particles having spherical or amorphous shapes, or hollow structures or mesoporous structures having spaces capable of retaining air. These particles having various configurations and made of metal oxides, metal nitrides, metal sulfides, metal halides, or other materials may have their surfaces chemically modified with a fluoropolyether compound or a fluoropolyether group-containing compound having the monovalent group represented by the formula (1).

For example, various inorganic fillers can also be used to adjust the physical properties of gel-like and rubber-like crosslinked products other than optical properties. Specific examples of inorganic fillers include silica powders, such as fumed silica (fumed silica or dry silica), precipitable silica (wet silica), spherical silica (fused silica), sol-gel silica, and silica aerogel, or silica powders obtained by treating the surfaces of the above silica powders with various organochlorosilanes, organodisilazanes, or cyclic organopolysilazanes; silica-based reinforcing fillers, such as silica powders obtained by re-treating the above surface-treated silica powders with an organosilane or organosiloxane having a fluoroalkyl group or a fluoropolyether group; and reinforcing or semi-reinforcing fillers, such as quartz powder, fused quartz powder, diatomaceous earth, and calcium carbonate.

In addition, inorganic pigments, such as titanium oxide, iron oxide, carbon black, and cobalt aluminate, heat resistance improvers, such as titanium oxide, iron oxide, carbon black, cerium oxide, cerium hydroxide, zinc carbonate, magnesium carbonate, and manganese carbonate, thermal conductivity imparting agents, such as alumina, boron nitride, silicon carbide, and metal powders, and electrical conductivity imparting agents, such as carbon black, silver powder, and electrically conductive zinc oxide, can also be used.

These components may have their surfaces chemically modified with a fluoropolyether compound or a fluoropolyether group-containing compound having a monovalent group represented by the formula (1) above.

In addition, various fluoropolyether group-containing compounds that do not have the monovalent group represented by the formula (1), specifically fluoropolyether group-containing compounds represented by the formula (2) where Xs are all hydroxyl groups, specifically fluoropolyether group-containing alcohol compounds represented by the formulas (4) to (7), or compounds having a fluorine atom at each terminal of the Rf group in the formula (2), or other compounds may be added as plasticizers, viscosity modifiers, or flexibility imparting agents.

As long as the physical properties of the intended crosslinked product are achieved at the end, raw material impurities, unreacted intermediates, terminal double bond transfer products, compounds in which the trans structure of the monovalent group represented by the formula (1) is partially or entirely converted into the cis structure, and other compounds that are contained in the synthesis of the fluoropolyether group-containing compound of the present invention may be contained.

In the photocrosslinkable fluoropolyether composition of the present invention, the concentration of the fluoropolyether group-containing compound is adjusted according to the purpose, and the concentration of the monovalent group represented by the formula (1) bonded to the fluoropolyether group in the entire photocrosslinkable fluoropolyether composition is not limited but is 0.0001 to 0.002 mol/g, preferably 0.0002 to 0.0015 mol/g. If the amount of the monovalent group represented by the formula (1) is less than this, the crosslinking reaction via photodimerization may not progress sufficiently. If the amount of the monovalent group represented by the formula (1) is more than this, the aggregation of the monovalent group represented by the formula (1) may result in insufficient progress of crosslinking via the photodimerization reaction. In the present invention, the concentration of the monovalent group represented by the formula (1) in the fluoropolyether group-containing compound can be measured by ¹H-NMR, infrared absorption spectrometry, or other techniques. When the composition contains two or more of the above fluoropolyether group-containing compounds, the concentration of the monovalent group represented by the formula (1) can be calculated based on the individually obtained concentration of the monovalent group represented by the formula (1) in each component and the mixing ratio of the components.

For the photocrosslinkable fluoropolyether composition containing the fluoropolyether group-containing compound of the present invention, the fluoropolyether group-containing compound having the monovalent group represented by the formula (1) can be used after diluted with a fluorinated solvent or a non-fluorinated solvent to, for example, a concentration of 0.001 to 99 % by weight depending on the intended use, as described above. In this case, the fluorinated solvent or non-fluorinated solvent (volatile component) is preferably removed by heating, air drying, or other methods during UV irradiation for crosslinking.

In the case where the photocrosslinkable fluoropolyether composition containing the fluoropolyether group-containing compound of the present invention is used for, for example, potting or coating of optical components or electronic components, the composition free of volatile components to prevent contamination of surrounding areas by volatile components is preferably placed at the crosslinking site. Specifically, the content of components (e.g., solvent component) having a boiling point lower than 200°C under atmospheric pressure in the entire photocrosslinkable fluoropolyether composition is preferably controlled to 1 % by weight or less, particularly preferably 0.1 % by weight or less.

A method for photocrosslinking the photocrosslinkable fluoropolyether composition containing the fluoropolyether group-containing compound of the present invention includes a step of irradiating the composition with light containing ultraviolet rays having a wavelength of 250 to 350 nm.

In the method for photocrosslinking the photocrosslinkable fluoropolyether composition of the present invention, any light containing ultraviolet rays in the wavelength region from 250 to 350 nm may be used for irradiation, and the light may also contain light outside that wavelength region. Specific examples of the light source include high-pressure mercury lamps, low-pressure mercury lamps, metal halide lamps, ultraviolet LEDs, and xenon lamps. A filter that cuts heat and light in unnecessary wavelength regions may be used for these light sources, and any installation method for light sources may be used, such as spotlight sources, line light sources, and surface light sources. The composition may be continuously irradiated with light using a substrate transport device using a conveyor system or a linear winding system, or an irradiation device using a mobile light source. The composition may be heated during UV irradiation to improve reactivity, leveling, and other properties.

In particular, the photocrosslinked product of the photocrosslinkable fluoropolyether composition is preferably in the form of a film.

The photocrosslinked product in the form of a film is obtained by applying the photocrosslinkable fluoropolyether composition diluted with a fluorinated solvent or non-fluorinated solvent as described above, or a liquid photocrosslinkable fluoropolyether composition not diluted with a solvent, leveling the composition as necessary to a predetermined thickness, and then irradiating the composition with light. The photocrosslinked product in the form of a film usually has a film thickness of about 2 nm to 500 µm. The film thickness can be measured with a micrometer or by calculation based on the film weight relative to the coating area and the specific gravity of the composition after drying, calculation from the correlation between the layer fluorine content in the film and the fluorine content in the composition by X-ray fluorescence, measurement of the film cross-section by AFM, or other methods.

As described above, the photocrosslinkable fluoropolyether composition comprising the fluoropolyether group-containing compound of the present invention is thermally stable and has excellent long-term storage stability because it does not undergo crosslinking upon heating, contains no non-fluorinated compound because it does not require addition of photopolymerization initiators or polymerization inhibitors, and can form a transparent photocrosslinked structure without generating low-molecular-weight volatile components. The photocrosslinkable fluoropolyether composition containing the fluoropolyether group-containing compound of the present invention is thus useful as a coating agent for various optical components, a nanoimprint material, a potting agent for electronic components and various sensors, and a photocurable 3D printer output material.

Examples of the article having a film of the photocrosslinked product of the photocrosslinkable fluoropolyether composition of the present invention include various optical components, nanoimprint components, electronic components and various sensors, and 3D printer output components.

### EXAMPLES

The present invention will be specifically described below with reference to Synthesis Examples, Examples, and Comparative Examples, but the present invention is not limited to the following Examples. In the following Examples, the number average molecular weight of the perfluoropolyether group is calculated from the characteristic peak intensity ratio between the terminal structure and the main chain structure based on ¹⁹F-NMR spectroscopy. The room temperature is 23°C. Furthermore, the thickness was measured by calculating the film weight relative to the coating area and the specific gravity of the composition excluding the solvent.

### [Synthesis Example 1]

A 200 ml three-necked flask equipped with a reflux device was charged with 50 g of the compound represented by formula (f-1) below: 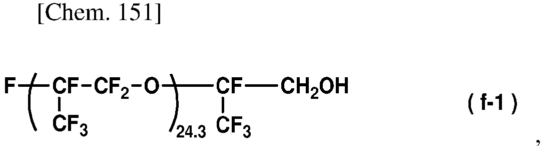 1.47 g of triethylamine, and 50 g of dehydrated hexafluoro-m-xylene, and a mixture of 2.42 g of trans-cinnamoyl chloride and 10 g of dehydrated methyl ethyl ketone was added dropwise at room temperature under a nitrogen atmosphere. After completion of the dropwise addition, the reaction solution was stirred with heating at a bath temperature of 50°C for 2 hours, then cooled to room temperature, and washed twice with 100 g of ethanol in a separating funnel. The collected lower layer was distilled off under reduced pressure at 120°C/133 Pa (1 Torr) for 1 hour using an evaporator to obtain 48.1 g of a clear, colorless liquid substance. According to ¹H-NMR, ¹⁹F-NMR, and IR, the obtained compound was confirmed to have the structure represented by formula (F-1) below.

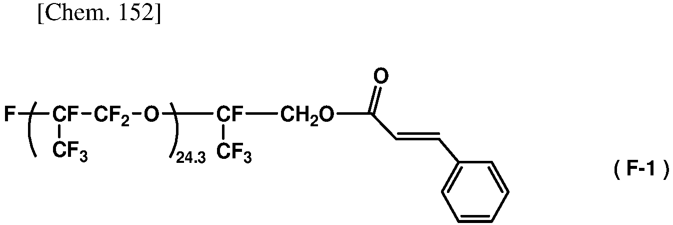

### [Synthesis Example 2]

A 300 ml three-necked flask equipped with a reflux device was charged with 50 g of the compound represented by formula (f-2) below: 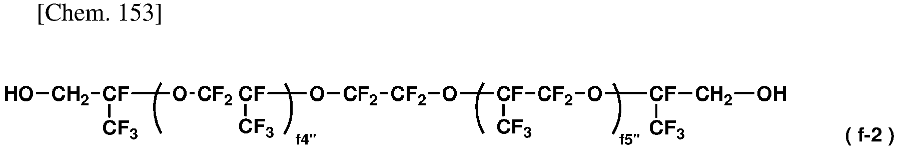 (f4" + f5" = 16.5),
3.88 g of triethylamine, and 70 g of dehydrated hexafluoro-m-xylene, and a mixture of 6.39 g of trans-cinnamoyl chloride and 20 g of dehydrated methyl ethyl ketone was added dropwise at room temperature under a nitrogen atmosphere. After completion of the dropwise addition, the reaction solution was stirred with heating at a bath temperature of 50°C for 2 hours, then cooled to room temperature, and washed twice with 100 g of ethanol in a separating funnel. The collected lower layer was distilled off under reduced pressure at 120°C/1 Torr for 1 hour using an evaporator to obtain 52.4 g of a clear, colorless liquid substance. According to ¹H-NMR, ¹⁹F-NMR, and IR, the obtained compound was confirmed to have the structure represented by formula (F-2) below. 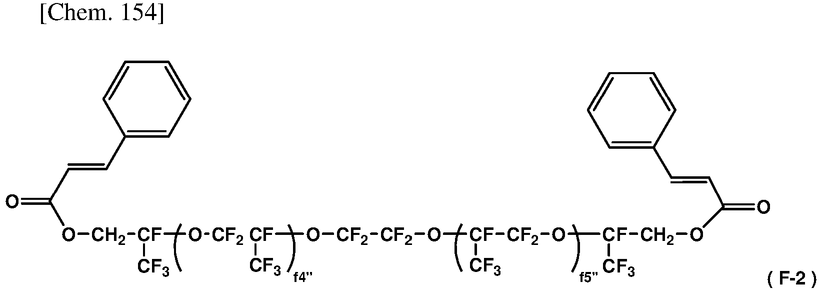 (f4" + f5" = 16.5)

### [Synthesis Example 3]

A 300 ml three-necked flask equipped with a reflux device was charged with a mixture of 50 g of the compound represented by formula (f-3) below: 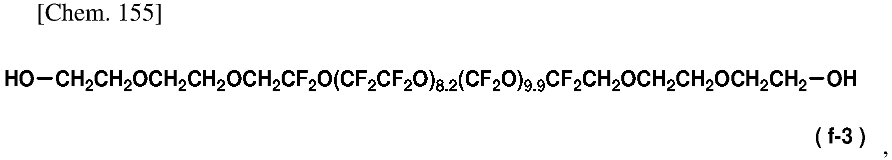 6.33 g of triethylamine, 10.42 g of trans-cinnamoyl chloride, and 80 g of dehydrated methyl ethyl ketone, followed by stirring with heating at a bath temperature of 50°C for 2 hours under a nitrogen atmosphere. The reaction solution was then cooled to room temperature, and washed twice with 150 g of ethanol in a separating funnel. The collected lower layer was distilled off under reduced pressure at 150°C/1 Torr for 1 hour using an evaporator to obtain 54.7 g of a clear, colorless liquid substance. According to ¹H-NMR, ¹⁹F-NMR, and IR, the obtained compound was confirmed to have the structure represented by formula (F-3) below.

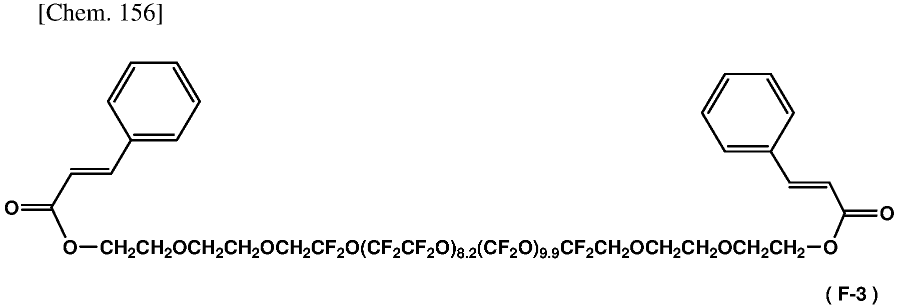

### [Synthesis Example 4]

A 200 ml three-necked flask equipped with a reflux device was charged with a mixture of 30 g of the compound represented by formula (f-4) below: 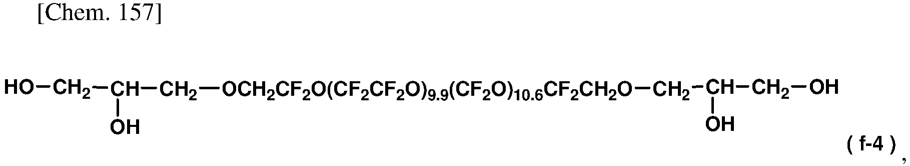 5.80 g of triethylamine, 10.33 g of trans-cinnamoyl chloride, and 40 g of dehydrated methyl ethyl ketone, followed by stirring with heating at a bath temperature of 50°C for 2 hours under a nitrogen atmosphere. The reaction solution was then cooled to room temperature, and washed twice with 150 g of ethanol in a separating funnel. The collected lower layer was distilled off under reduced pressure at 150°C/1 Torr for 1 hour using an evaporator to obtain 54.7 g of a clear, colorless liquid substance. The obtained clear, colorless liquid substance (40 g) was diluted with methyl ethyl ketone, mixed with 2 g of activated carbon and 1 g of silica gel, and stirred at room temperature for 12 hours. The solution that had been pressure-filtered through filter paper was distilled off under reduced pressure at 150°C/1 Torr for 1 hour using an evaporator to obtain 32 g of a clear, colorless liquid substance. According to ¹H-NMR, ¹⁹F-NMR, and **IR,** the obtained compound was confirmed to have the structure represented by formula (F-4) below.

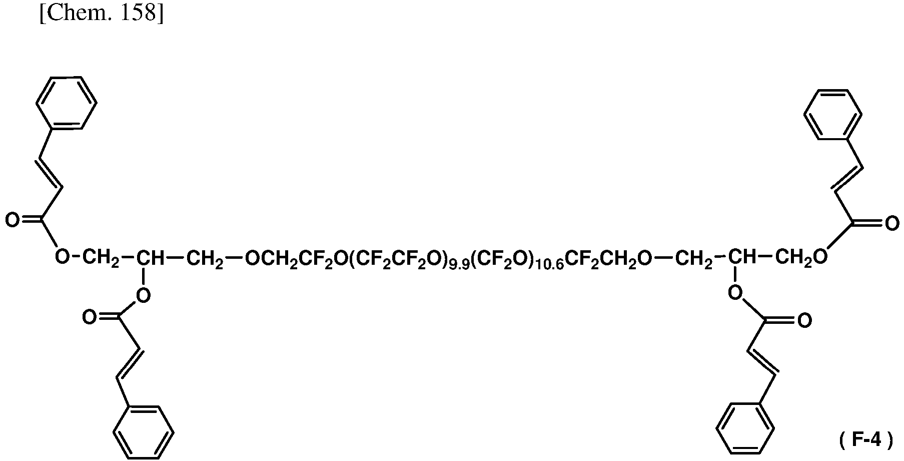

### [Synthesis Example 5]

A 300 ml three-necked flask equipped with a reflux device was charged with 50 g of the compound represented by formula (f-5) below: 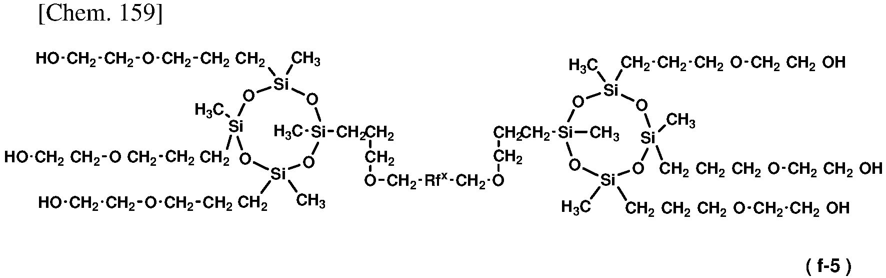 Rf^{X}:

-CF₂(OCF₂CF₂CF₂)_{1.2}(OCF₂CF₂)_{21.0}(OCF₂)_{22.2}OCF₂- ,

6.3 g of triethylamine, and 100 g of dehydrated hexafluoro-m-xylene, and a mixture of 10 g of trans-cinnamoyl chloride and 50 g of dehydrated methyl ethyl ketone was added dropwise at room temperature under a nitrogen atmosphere. After completion of the dropwise addition, the reaction solution was stirred with heating at a bath temperature of 50°C for 2 hours, then cooled to room temperature, and washed once with 100 g of water and twice with 100 g of ethanol in a separating funnel. The collected lower layer was distilled off under reduced pressure at 150°C/1 Torr for 1 hour using an evaporator to obtain 50.2 g of a colorless, translucent ointment-like substance. According to ¹H-NMR, ¹⁹F-NMR, and IR, the obtained compound was confirmed to have the structure represented by general formula (F-5) below. 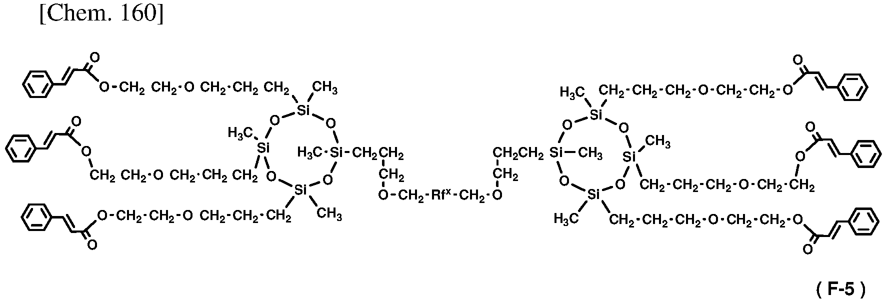 Rf^{X}:

-CF₂(OCF₂CF₂CF₂)_{1.2}(OCF₂CF₂)_{21.0}(OCF₂)_{22.2}OCF₂-

### [Synthesis Example 6]

A 300 ml three-necked flask equipped with a stirrer was charged with 50 g of the compound represented by formula (f-6) below: 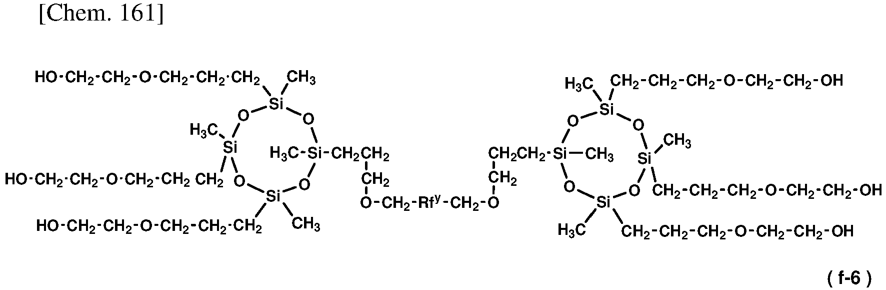 Rf^{y}:

-CF₂(OCF₂CF₂)₁₀(OCF₂)_{10.7}OCF₂- ,

13 g of triethylamine, and 100 g of dehydrated hexafluoro-m-xylene, and a mixture of 20 g of trans-cinnamoyl chloride and 50 g of dehydrated methyl ethyl ketone was added dropwise at room temperature under a nitrogen atmosphere. After completion of the dropwise addition, the mixture was stirred with heating at a bath temperature of 50°C for 2 hours, then returned to room temperature, mixed with 10 g of methanol, and stirred at room temperature for 1 hour. The obtained reaction liquid was distilled off under reduced pressure at 150°C/1 Torr for 1 hour using an evaporator to obtain 52.7 g of a pale yellow, transparent ointment-like substance. According to ¹H-NMR, ¹⁹F-NMR, and IR, the obtained compound was confirmed to have the structure represented by general formula (F-6) below.

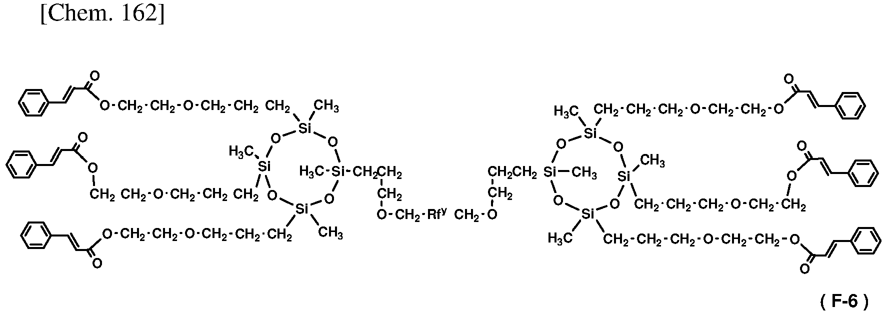

Rf^{y}:

-CF₂(OCF₂CF₂)₁₀(OCF₂)_{10.7}OCF₂-

### [Examples 1 to 9 and Comparative Example 1]

The compositions were prepared using the compounds of Synthesis Examples 1 to 6 (compounds represented by formulas (F-1) to (F-6)) and the compounds represented by formulas (F-7) and (F-8) below and used to form coating films and determine curability.

The compound represented by formula (F-7) below:

HOCH₂CF₂(OCF₂CF₂)_{9.1}(OCF₂)_{9.7}OCF₂CH₂OH (F-7)

The compound represented by formula (F-8) below:

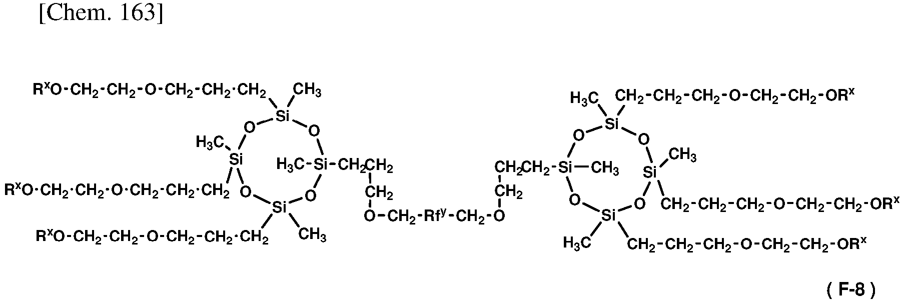

R^{X}: -(CO)-NH-CH₂CH₂O(CO)-CH=CH₂

(Rf^{y} is as defined above.)

### [Formation of Coating Film]

The composition was prepared by mixing the compounds represented by formulas (F-1) to (F-8) in the proportions shown in Table 1 and diluting the mixture with a solvent as necessary. The composition layer was formed and leveled on an aluminum Petri dish to a thickness of 20 µm by any one of the following methods (1) to (4). The operation was performed under light shielding.
(1) A 30 % by weight solution (composition) of the compound or mixture in hexafluoro-m-xylene was placed, dried at 120°C for 30 minutes, and then returned to room temperature.
(2) A 30 % by weight solution (composition) of the compound or mixture in isobutyl acetate was applied and dried at 120°C for 30 minutes.
(3) The compound or mixture (composition) was placed without dilution, leveled at 150°C for 30 minutes, and cooled at room temperature.
(4) The compound or mixture (composition) was placed as is and leveled at room temperature for 12 hours.

The concentration of the cinnamic acid residue in the composition and the coating film formation method are shown in Table 1.

The concentration of the cinnamic acid residue in the composition was calculated by quantification based on the peaks appearing in the chemical shift from 7 to 8 ppm, which were assumed to be attributed to the phenyl group and the hydrogen atoms directly bonded to the carbon atoms of the phenyl group, with the total number of hydrogen atoms considered as 6H for conversion in the NMR spectrum of the compound and mixture before solvent dilution obtained by ¹H-NMR using tetramethylsilane as an internal standard, whereby the concentration of the cinnamic acid residue in each of the compounds represented by formulas (F-1) to (F-6) was determined.

### [Whether Film Cures After Leveling]

After leveling in any one of the methods (1) to (4), whether the film was cured by heating or with time in each method was determined by finger tough. The results are shown in Table 1 where "cured" means that the film was cured, and "not cured" means that the film was not cured. Note that "cured" means that all of the targets were cured.

### [Determination of UV Curability]

The UV curability of the films that were not cured after leveling (Examples 1 to 9) was determined. The films were irradiated with a low-pressure mercury lamp in air, and whether the films were cured was determined by finger tough when the cumulative light dose at 280 nm reached 2,000 mJ/cm². The results are shown in Table 1 where "cured" means that the film was cured, and "not cured" means that the film was not cured.

**[Table 1]**

| Compounding amount (pbw) | Example 1 | Example 2 | Example 3 | Example 4 | Example 5 | Example 6 | Example 7 | Example 8 | Example 9 | Comp. Example 1 |
|---|---|---|---|---|---|---|---|---|---|---|
| F-1 | 50 | | | | | | 40 | 40 | | |
| F-2 | 50 | | | | | | | 20 | | |
| F-3 | | 20 | | | | | | | | |
| F-4 | | | | | | | 20 | | | |
| F-5 | | | | | 30 | 60 | | 40 | | |
| F-6 | | 80 | 100 | 100 | 70 | | 40 | | 100 | |
| F-7 | | | | | | 40 | | | | |
| F-8 | | | | | | | | | | 100 |
| Concentration of cinnamic acid residue (mmol/g) | 0.41 | 0.98 | 1.00 | 1.00 | 1.15 | 0.91 | 0.79 | 0.82 | 1.00 | 0 |
| Coating film forming method | (1) | (1) | (1) | (2) | (2) | (4) | (1) | (1) | (3) | (3) |
| Whether film cures after leveling | not cured | not cured | not cured | not cured | not cured | not cured | not cured | not cured | not cured | cured |
| Whether film cures after UV irradiation | cured | cured | cured | cured | cured | cured | cured | cured | cured | - |

## Claims

1. A fluoropolyether group-containing compound comprising, in its molecule, a total of 1 to 20 monovalent groups represented by the general formula (1) below, at one or both terminals of a linear perfluoropolyether group having a number average molecular weight of 1,000 to 40,000 with a linking group therebetween, 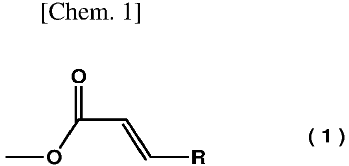 wherein R is a phenyl group, and may have one or two identical or different substituents.

2. The fluoropolyether group-containing compound according to claim 1 represented by the general formula (2) below:
V-Rf-Y[Q(R¹-X)_{b}]_{c} (2)
wherein V is a hydrogen atom, a fluorine atom, a C₁-C₆ alkyl group that may be substituted with fluorine, or a monovalent group represented by -Y[Q(R¹-X)_{b}]_{c}; Rf is a divalent linear perfluoropolyether group having a number average molecular weight of 1,000 to 40,000 and composed of C₁-C₆ perfluoroalkylene groups and oxygen atoms; Y is independently a single bond or a C₁-C₂₀ (c+1)-valent organic group that may contain an oxygen atom, a nitrogen atom, a fluorine atom, or a silicon atom; Q is independently a single bond or a (b+1)-valent linking group composed of one or two or more elements selected from C, O, H, N, Si, S, F, Cl, and Br, and may have a cyclic structure; R¹ is independently a single bond or a C₁-C₂₀ divalent organic group that may contain an oxygen atom, a nitrogen atom, or a sulfur atom; X is independently a monovalent group represented by the general formula (1) or a hydroxyl group, and 1 to 20 Xs in the molecule are monovalent groups represented by the general formula (1); b is independently an integer of 1 to 9; and c is independently an integer of 1 to 3.

3. The fluoropolyether group-containing compound according to claim 1, wherein the linear perfluoropolyether group is a divalent perfluoropolyether group represented by the general formula below: 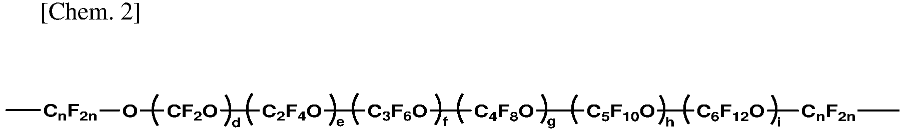 wherein n is independently for each unit an integer of 1 to 6; d, e, f, g, h, and i are each an integer of 0 to 200; d + e + f + g + h + i is an integer of 4 to 200; each unit may be linear or branched; individual repeating units in parentheses with subscripts d, e, f, g, h, and i may be randomly bonded; and the perfluoropolyether group has a number average molecular weight of 1,000 to 40,000.

4. The fluoropolyether group-containing compound according to claim 1, wherein the linear perfluoropolyether group is selected from divalent perfluoropolyether groups represented by the structural formulas below: 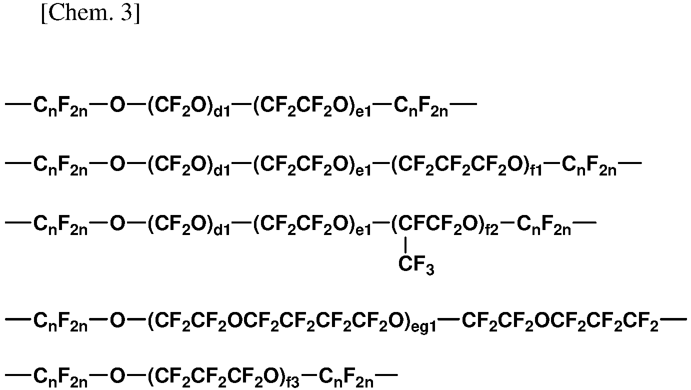 wherein n is independently for each unit an integer of 1 to 6; d1, e1, f1, and f2 are each an integer of 1 or more; each sum of d1, e1, f1, and f2 is an integer of 4 to 200; eg1 is an integer of 2 to 99; and f3 is an integer of 4 to 200. 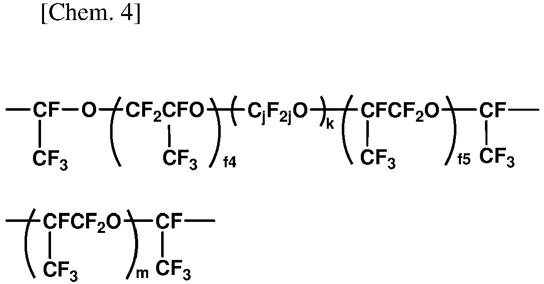 wherein j is an integer of 1 to 6; CⱼF₂ⱼO may be linear or branched, but is linear when j is 3; k is an integer of 0 to 6; f4 and f5 are each an integer of 1 to 100; f4 + f5 is an integer of 2 to 200; k + f4 + f5 is an integer of 4 to 200; and m is an integer of 5 to 200.

5. The fluoropolyether group-containing compound according to claim 1, wherein the linking group that connects the monovalent group represented by the general formula (1) and the fluoropolyether group is a divalent to hexavalent group containing a cyclic structure.

6. The fluoropolyether group-containing compound according to claim 1, wherein the linking group that connects the monovalent group represented by the general formula (1) and the fluoropolyether group contains any one of the structures below: 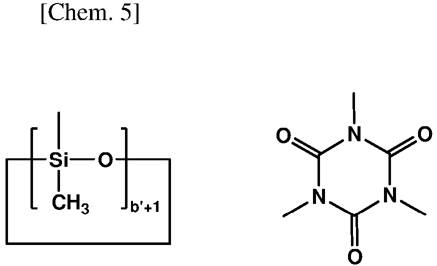 wherein b' is an integer of 2 to 9.

7. The fluoropolyether group-containing compound according to claim 1, wherein the monovalent group represented by the general formula (1) is a cinnamic acid residue represented by the structural formula below.

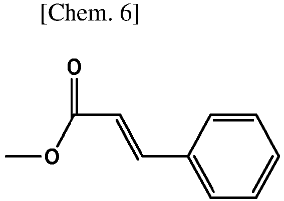

8. The fluoropolyether group-containing compound according to claim 2, wherein Y in the general formula (2) is a group represented by any one of formulas below:
-CH₂-
-C(=O)-
-CH₂CH₂-
-CH₂CH₂CH₂-
-CH₂CH₂CH₂CH₂-
-CH₂CH₂CH₂CH₂CH₂-
-CH₂CH₂CH₂CH₂CH₂CH₂-
-CH₂CH₂CH₂CH₂CH₂CH₂CH₂-
-CH₂CH₂CH₂CH₂CH₂CH₂CH₂CH₂-
-CH₂O-
-CH₂OCH₂CH₂-
-CH₂OCH₂CH₂CH₂-
-CH₂OCH₂CH(CH₃)CH₂- 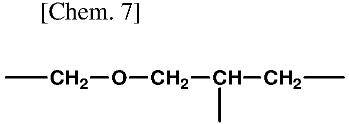
-C(=O)-NH-
-C(=O)-NH-CH₂CH₂-
-C(=O)-NH-CH₂CH₂CH₂-
-C(=O)-N(CH₃)-Ph-Si(CH₃)₂CH₂CH₂-
-C(=O)-NH-Ph-CH₂CH₂CH₂Si(CH₃)₂CH₂CH₂-
-C(=O)-N(CH₃)-Ph-CH₂CH₂CH₂Si(CH₃)₂CH₂CH₂-
wherein Ph is a phenylene group.

9. The fluoropolyether group-containing compound according to claim 2, wherein R¹ in the general formula (2) is a group represented by any one of formulas below:
-CₓH₂ₓ-
-CₓH₂ₓ(OC_{y}H_{2y})_{z}-
-CₓH₂ₓ(OC_{y}H_{2y})_{z}OCH₂CH(CH₃)-
-CₓH₂ₓSC_{y}H_{2y}-
-CₓH₂ₓCOO-C_{y}H_{2y}-
-CₓH₂ₓCONH-C_{y}H_{2y}-
-CₓH₂ₓO(CO)C_{y}H_{2y}-
-CₓH₂ₓONH(CO)C_{y}H_{2y}- 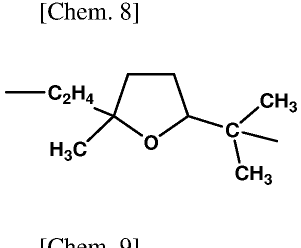 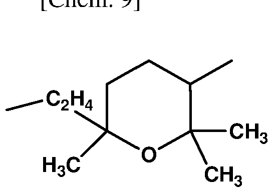
-Ph-
wherein x and y are each independently an integer of 1 to 20; z is an integer of 1 to 6;
x + y and x + z × y are 20 or less; and Ph is a phenylene group.

10. The fluoropolyether group-containing compound according to claim 1 comprising a structure represented by any one of the formulas below: 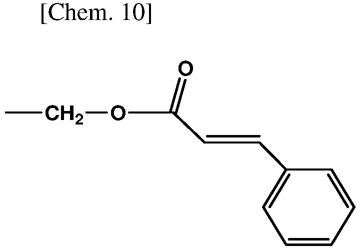 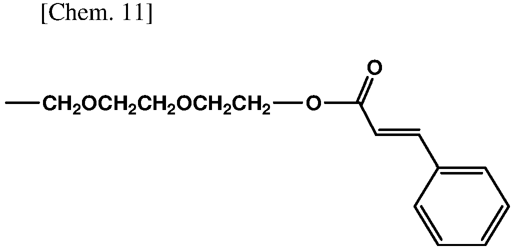 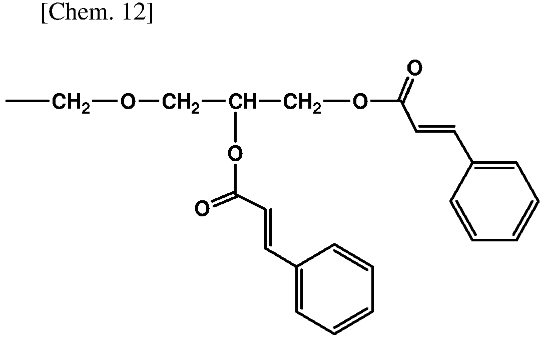 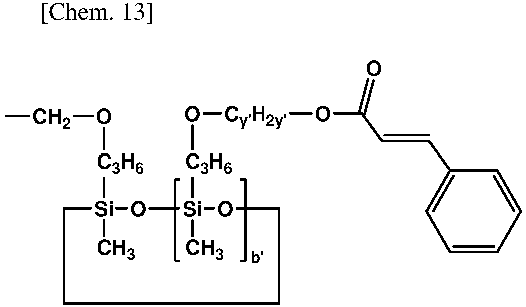 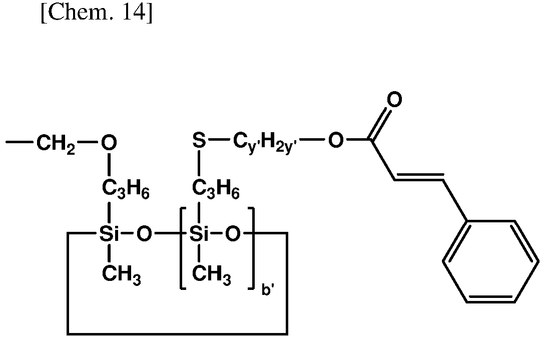 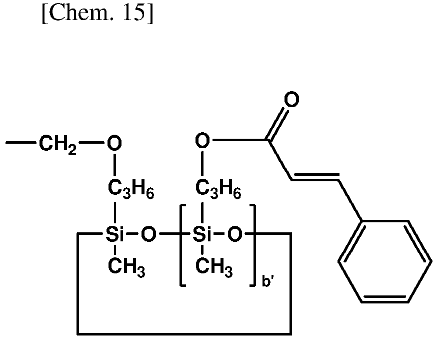 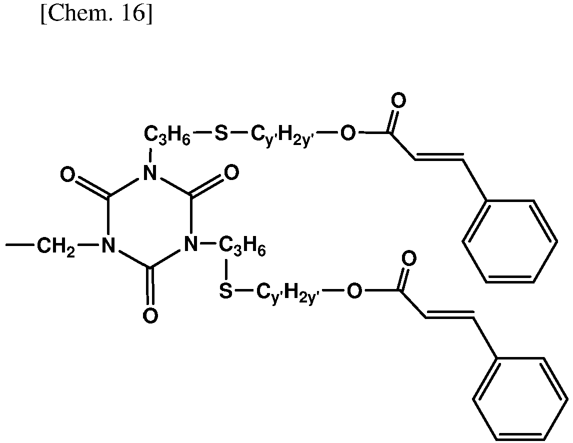 wherein b' is an integer of 2 to 9; and y' is independently for each unit an integer of 2 to 10.

11. A photocrosslinkable fluoropolyether composition comprising the fluoropolyether group-containing compound according to any one of claims 1 to 10.

12. The photocrosslinkable fluoropolyether composition according to claim 11 diluted with a fluorinated solvent containing 0.001 to 99 % by weight of the fluoropolyether group-containing compound.

13. The photocrosslinkable fluoropolyether composition according to claim 11 diluted with a non-fluorinated solvent containing 0.001 to 99 % by weight of the fluoropolyether group-containing compound.

14. The photocrosslinkable fluoropolyether composition according to claim 11, wherein a content of a component having a boiling point lower than 200°C under atmospheric pressure is 1 % by weight or less.

15. The photocrosslinkable fluoropolyether composition according to claim 11, wherein a concentration of the monovalent group represented by the general formula (1) is 0.0001 to 0.002 mol/g.

16. A photocrosslinked product of the photocrosslinkable fluoropolyether composition according to claim 11.

17. An article comprising the photocrosslinked product according to claim 16.

18. The article according to claim 17, wherein the photocrosslinked product is in a form of a film.

19. A method for photocrosslinking a photocrosslinkable fluoropolyether composition, comprising a step of irradiating the photocrosslinkable fluoropolyether composition according to claim 11 with light containing ultraviolet rays having a wavelength of 250 to 350 nm.
